# EUROPEAN PATENT SPECIFICATION

(11) **EP 2 178 937 B1**
(45) Date of publication and mention of the grant of the patent: **21.09.2016**
(21) Application number: 08779985.4
(22) Date of filing: 02.07.2008
(51) Int. Cl.: C08G 18/10, C08G 18/75, C08G 18/48, C08G 18/38, C08G 18/32, C09D 175/16, C08G 18/67, C08G 18/44, C08G 18/80, C09J 175/16, C08G 18/81, C08F 290/06, C08G 18/42, C08G 18/62, C08F 2/48

(54) **ACRYLATED URETHANES, PROCESSES FOR MAKING THE SAME AND CURABLE COMPOSITIONS INCLUDING THE SAME**
ACRYLIERTE URETHANE, HERSTELLUNGSVERFAHREN DAFÜR UND HÄRTBARE ZUSAMMENSETZUNGEN DAMIT
URÉTHANES ACRYLÉS, LEUR PROCÉDÉS DE FABRICATIONS ET COMPOSITIONS DURCISSABLES LES COMPRENANT

(30) Priority: 03.07.2007 US 772843
(43) Date of publication of application: 28.04.2010
(73) Proprietor: Henkel IP & Holding GmbH, 40589 Düsseldorf (DE)
(72) Inventor: JACOBINE, Anthony, F., Meriden, CT 06450 (US); NAKOS, Steven, T., Andover, CT 06232 (US); WOODS, John, G., Farmington, CT 06032 (US); GLASER, David, M., New Britain, CT 06051 (US); SCHALL, Joel, D., New Haven, CT 06514 (US)
(74) Representative: Henkel IP Department
(86) International application number: PCT/US2008/008295
(87) International publication number: WO 2009/005835

(56) References cited:
- EP-A2- 0 584 970
- EP-A2- 1 085 065
- US-A- 4 330 657
- US-A- 5 475 038
- US-A1- 2001 031 369
- US-A1- 2003 162 860
- US-A1- 2005 065 310
- US-A1- 2006 079 659
- US-B1- 6 239 189

## Description

### BACKGROUND OF THE INVENTION

### Field of the Invention

The present invention is directed to acrylated urethanes which are the reaction product of an isocyanate functional acrylated urethane and an alcohol compound comprising at least two hydroxyl groups; or the reaction product of an isocyanate functional urethane which is the reaction product of at least one alcohol compound selected from the group consisting of amino alcohols, thioether alcohols, phosphino alcohols and mixtures thereof and at least one polyisocyanate; and at least one hydroxy-functional material having at least one acrylate group, the acrylated urethanes being useful in compositions for anaerobic or radiation cure.

### Brief Description of Related Technology

Radiation curable materials provide desirable environmental advantages, production efficiencies, and lower equipment costs. Terminally unsaturated urethane oligomers have been used in radiation curing applications to provide enhanced toughness, wear resistance, adhesion, and flexibility. For example, U.S. Patent No. 5,578,693 discloses radiation curable multifunctional terminally unsaturated urethane oligomers comprising the reaction product of: (a) a terminally unsaturated isocyanate containing polyurethane oligomer, with (b) an alkoxylated polyhydric alcohol. These capped urethane oligomer products are then rapidly polymerized by the free radicals or cations generated by exposure to radiation such as ultraviolet light.

Amine additives such as dimethyl-p-toluidine and diethyl-o-toluidine are commonly used to improve surface cure of UV-curable, acrylated urethane resins. However, these amine additives can present health concerns during processing.

It is desirable to provide acrylated urethanes suitable for food contact or other potentially sensitizing applications which avoid health issues presented by conventional amine additives while providing improved surface cure and enhanced working time or pot life. Also, there is a need for acrylated urethanes for structural adhesive applications having one or more of the following attributes: good manufacturability, low color, high fracture toughness, good strength, oil resistance, good adhesion, flexibility after aging and good surface cure.

### SUMMARY OF THE INVENTION

The Present invention relates to an acrylated urethane represented by the structure: 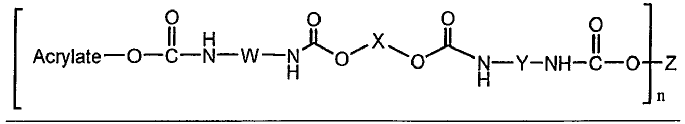 wherein n is 3; Acrylate is an acrylate-containing group or methacrylate-containing group; W and Y are each the residues of independently selected polyisocyanates; X is the residue of an alcohol compound comprising at least two hydroxyl groups; and Z is the residue of an alcohol compound comprising at least three hydroxyl groups which is selected from the group consisting of amino alcohols, thioether alcohols, phosphino alcohols and mixtures thereof.

The present invention also relates to composition comprising the acrylated urethane represented by the structure: 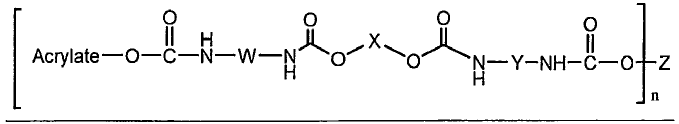 wherein n is 3; Acrylate is an acrylate-containing group or methacrylate-containing group; W and Y are each the residues of independently selected polyisocyanates; X is the residue of an alcohol compound comprising at least two hydroxyl groups; and Z is the residue of an alcohol compound comprising at least three hydroxyl groups which is selected from the group consisting of amino alcohols, thioether alcohols, phosphino alcohols and mixtures thereof and at least one anaerobic curing component.

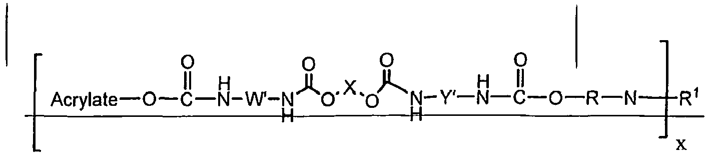

The present invention encompasses a radiation-curable composition comprising:
(1) the acrylated urethane represented by the structure: 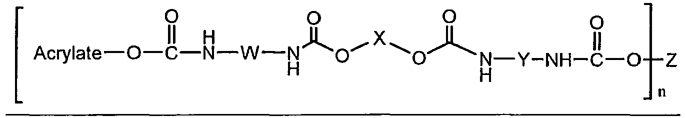 wherein n is 3; Acrylate is an acrylate-containing group or methacrylate-containing group; W and Y are each the residues of independently selected polyisocyanates; X is the residue of an alcohol compound comprising at least two hydroxyl groups; and Z is the residue of an alcohol compound comprising at least three hydroxyl groups which is selected from the group consisting of amino alcohols, thioether alcohols, phosphino alcohols and mixtures thereof; and
(2) at least one reactive monomer.

The present invention also encompasses a cross linked polymer composition obtained by exposing the radiation-curable composition comprising:
(1) the acrylated urethane represented by the structure: 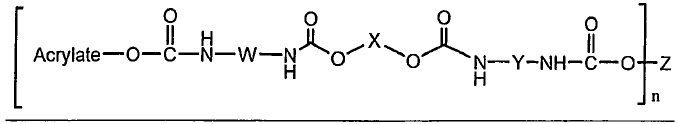 wherein n is 3; Acrylate is an acrylate-containing group or methacrylate-containing group; W and Y are each the residues of independently selected polyisocyanates; X is the residue of an alcohol compound comprising at least two hydroxyl groups; and Z is the residue of an alcohol compound comprising at least three hydroxyl groups which is selected from the group consisting of amino alcohols, thioether alcohols, phosphino alcohols and mixtures thereof; and
(2) at least one reactive monomer to radiation.

### BRIEF DESCRIPTION OF THE FIGURES

The foregoing summary, as well as the following detailed description, will be better understood when read in conjunction with the appended drawings. In the drawings:
Fig. 1 is a graph of complex shear modulus (G*) as a function of time for a sample of an acrylated polyurethane according to the present invention and samples of comparative acrylated polyurethanes according to Example C; and
Fig. 2 is a graph of complex shear modulus (G*) as a function of time for a sample of an acrylated polyurethane according to the present invention and a sample of a comparative acrylated polyurethane according to Example D.

### DETAILED DESCRIPTION OF THE INVENTION

Notwithstanding that the numerical ranges and parameters setting forth the broad scope of the invention are approximations, the numerical values set forth in the specific examples are reported as precisely as possible. Any numerical values, however, inherently contain certain errors necessarily resulting from the standard deviation found in their respective testing measurements. Furthermore, when numerical ranges of varying scope are set forth herein, it is contemplated that any combination of these values inclusive of the recited values may be used.

Also, it should be understood that any numerical range recited herein is intended to include all sub-ranges subsumed therein. For example, a range of "1 to 10" is intended to include all sub-ranges between and including the recited minimum value of 1 and the recited maximum value of 10, that is, having a minimum value equal to or greater than 1 and a maximum value of equal to or less than 10.

As used herein, the term "composition" is intended to encompass a product comprising the specified ingredients in the specified amounts, as well as any product which results, directly or indirectly, from combination of the specified ingredients in the specified amounts.

As used herein, "formed from" or "prepared from" denotes open, e.g., "comprising," claim language. As such, it is intended that a composition "formed from" or "prepared from" a list of recited components be a composition comprising at least these recited components or the reaction product of at least these recited components, and can further comprise other, non-recited components, during the composition's formation or preparation.

As used herein, the phrase "reaction product of" means chemical reaction product(s) of the recited components, and can include partial reaction products as well as fully reacted products.

As used herein, the term "polymer" is meant to encompass oligomers, and includes, without limitation, both homopolymers and copolymers. The term "prepolymer" means a compound, monomer or oligomer used to prepare a polymer, and includes, without limitation, both homopolymer and copolymer oligomers. The term "oligomer" means a polymer consisting of only a few monomer units up to ten monomer units, for example a dimer, trimer or tetramer.

As used herein, the term "cure" as used in connection with a composition, e.g., "composition when cured" or a "cured composition", means that any curable or crosslinkable components of the composition are at least partially cured or crosslinked. In some non-limiting embodiments of the present invention, the chemical conversion of the crosslinkable components, i.e., the degree of crosslinking, ranges from 5% to 100% of complete crosslinking whereas complete crosslinking means full reaction of all crosslinkable components. In other non-limiting embodiments, the degree of crosslinking ranges from 15% to 80% or 50% to 60% of full crosslinking. One skilled in the art will understand that the presence and degree of crosslinking, i.e., the crosslink density, can be determined by a variety of methods, such as dynamic mechanical thermal analysis (DMA) using a TA Instruments DMA 2980 DMA analyzer over a temperature range of -65°F (-18°C) to 350°F (177°C) conducted under nitrogen according to ASTM D 4065-01. This method determines the glass transition temperature and crosslink density of free films of coatings or polymers. These physical properties of a cured material are related to the structure of the crosslinked network.

Curing of a polymerizable composition can be obtained by subjecting the composition to curing conditions, such as but not limited to irradiation, addition of anaerobic curing agents, etc., leading to the reaction of reactive groups of the composition and resulting in polymerization and formation of a solid polymerizate. When a polymerizable composition is subjected to curing conditions, following polymerization and after reaction of most of the reactive groups occurs, the rate of reaction of the remaining unreacted reactive groups becomes progressively slower. In some non-limiting embodiments, the polymerizable composition can be subjected to curing conditions until it is at least partially cured. The term "at least partially cured" means subjecting the polymerizable composition to curing conditions, wherein reaction of at least a portion of the reactive groups of the composition occurs, to form a solid polymerizate. In some non-limiting embodiments, the polymerizable composition can be subjected to curing conditions such that a substantially complete cure is attained and wherein further exposure to curing conditions results in no significant further improvement in polymer properties, such as strength or hardness.

As discussed above, amine additives are commonly used to improve surface cure in UV-cured urethane acrylate resins. For example, Type II photoinitiators commonly consist of a light-absorbing molecule (dye) and an amine synergist. The amine synergist, in addition to reacting with the excited dye to create initiating free radicals, can also cause chain transfer with the propagating polymer chain ends. Consequently, polymers initiated with Type II photoinitiators typically have limited kinetic chain lengths and tend to be limited to fairly low moduli.

The present inventors have discovered that covalently bonding an amine into a functional polymer backbone allows for high-modulus cured materials. While not intending to be bound by any theory, the ability to prepare high modulus materials is believed to be facilitated by chain transfer of the bound amine, resulting in grafting onto a polymer chain rather than kinetic chain termination. Generally, the overall cure speeds of photocurable bound amine compositions according to the present invention were found to be equivalent to or faster than the corresponding free amine control compositions.

Inclusion of amine moieties within an acrylated urethane also facilitates improved surface cure by preventing loss of the amine due to leaching or migration to the surface. This invention allows for the production of improved surface cure acrylated urethane resins suitable for food contact or other potentially sensitizing applications where health issues or toxicity are an issue. Also, working time or pot life can be extended and can, in theory, be controlled by the selection and amount of amine incorporated into the polymer and formulation toxicity can be reduced due to dramatically decreased bioavailability of the amine (the amines most commonly used in redox initiator systems, such as dimethyl-p-toluidine and diethyl-o-toluidine, can provide health issues).

In some non-limiting embodiments, the present invention provides acrylated urethanes comprising the reaction product of: (a) at least one urethane comprising at least two isocyanate groups and at least one acrylate group; and (b) at least one alcohol compound comprising at least two hydroxyl groups. The acrylated urethane can be a compound, oligomer or polymer, as desired.

The acrylated urethanes of the present invention can have a number average molecular weight ranging from 500 to 10,000 grams/mole, or 1000 to 7000 grams/mole.

As discussed above, the acrylated urethanes of the present invention are prepared from at least one (one or more) urethane comprising at least two isocyanate groups and at least one acrylate group. In some embodiments, the urethane can be the reaction product of at least one polyisocyanate, at least one polyol and at least one hydroxy-functional material having at least one acrylate group. The reaction of these three reactants may be sequential or simultaneous. The present invention is not intended to be limited to any particular method for making these urethanes.

As used herein, the term "isocyanate" includes compounds, monomers, oligomers and polymers comprising at least one or at least two -N=C=O functional groups and/or at least one or at least two -N=C=S (isothiocyanate) groups. Monofunctional isocyanates can be used as chain terminators or to provide terminal groups during polymerization. As used herein, "polyisocyanate" means an isocyanate comprising at least two -N=C=O functional groups, such as diisocyanates or triisocyanates, as well as dimers and trimers or biurets of the isocyanates, and mixtures thereof. Suitable isocyanates are capable of forming a covalent bond with a reactive group such as a hydroxy functional group. Isocyanates useful in the present invention can be branched or unbranched.

Isocyanates useful in the present invention include "modified", "unmodified" and mixtures of "modified" and "unmodified" isocyanates. The isocyanates can have "free", "blocked" or partially blocked isocyanate groups. The term "modified" means that the aforementioned isocyanates are changed in a known manner to introduce biuret, urea, carbodiimide, urethane or isocyanurate groups or blocking groups. In some non-limiting embodiments, the "modified" isocyanate is obtained by cycloaddition processes to yield dimers and trimers of the isocyanate, i.e., polyisocyanates. Free isocyanate groups are extremely reactive. In order to control the reactivity of isocyanate group-containing components, the NCO groups may be blocked with certain selected organic compounds that render the isocyanate group inert to reactive hydrogen compounds at room temperature. When heated to elevated temperatures, e.g., ranging from 90°C to 200°C, the blocked isocyanates release the blocking agent and react in the same way as the original unblocked or free isocyanate.

Generally, compounds used to block isocyanates are organic compounds that have active hydrogen atoms, e.g., volatile alcohols, epsilon-caprolactam or ketoxime compounds. Non-limiting examples of suitable blocking compounds include phenol, cresol, nonylphenol, epsilon-caprolactam and methyl ethyl ketoxime.

As used herein, the NCO in the NCO:OH ratio represents the free isocyanate of free isocyanate-containing materials, and of blocked or partially blocked isocyanate-containing materials after the release of the blocking agent. In some cases, it is not possible to remove all of the blocking agent. In those situations, more of the blocked isocyanate-containing material would be used to attain the desired level of free NCO.

The molecular weight of the isocyanate can vary widely. In alternate non-limiting embodiments, the number average molecular weight (Mn) of each can be at least 100 grams/mole, or at least 150 grams/mole, or less than 15,000 grams/mole, or less than 5,000 grams/mole. The number average molecular weight can be determined using known methods, such as by gel permeation chromatography (GPC) using polystyrene standards.

Non-limiting examples of suitable isocyanates include aliphatic, cycloaliphatic, aromatic and heterocyclic isocyanates, dimers and trimers thereof, and mixtures thereof. When an aromatic polyisocyanate is used, generally care should be taken to select a material that does not cause the polyurethane to color (e.g., yellow).

In some non-limiting embodiments, the aliphatic and cycloaliphatic diisocyanates can comprise 6 to 100 carbon atoms linked in a straight chain or cyclized and having two isocyanate reactive end groups.

Non-limiting examples of suitable aliphatic isocyanates include straight chain isocyanates such as ethylene diisocyanate, trimethylene diisocyanate, 1,6-hexamethylene diisocyanate (HDI), tetramethylene diisocyanate, hexamethylene diisocyanate, octamethylene diisocyanate, nonamethylene diisocyanate, decamethylene diisocyanate, 1,6,11-undecanetriisocyanate, 1,3,6-hexamethylene triisocyanate, bis(isocyanatoethyl)-carbonate, and bis(isocyanatoethyl)ether.

Other non-limiting examples of suitable aliphatic isocyanates include branched isocyanates such as trimethylhexane diisocyanate, trimethylhexamethylene diisocyanate (TMDI), 2,2'-dimethylpentane diisocyanate, 2,2,4-trimethylhexane diisocyanate, 2,4,4,-trimethylhexamethylene diisocyanate, 1,8-diisocyanato-4-(isocyanatomethyl)octane, 2,5,7-trimethyl-1,8-diisocyanato-5-(isocyanatomethyl) octane, 2-isocyanatopropyl-2,6-diisocyanatohexanoate, lysinediisocyanate methyl ester and lysinetriisocyanate methyl ester.

Non-limiting examples of suitable cycloaliphatic isocyanates include dinuclear compounds bridged by an isopropylidene group or an alkylene group of 1 to 3 carbon atoms. Non-limiting examples of suitable cycloaliphatic isocyanates include 1,1'-methylene-bis-(4-isocyanatocyclohexane) or 4,4'-methylene-bis-(cyclohexyl isocyanate) (such as DESMODUR W commercially available from Bayer Corp.), 4,4'-isopropylidene-bis-(cyclohexyl isocyanate), 1,4-cyclohexyl diisocyanate (CHDI), 4,4'-dicyclohexylmethane diisocyanate, 3-isocyanato methyl-3,5,5-trimethylcyclohexyl isocyanate (a branched isocyanate also known as isophorone diisocyanate or IPDI) which is commercially available from Arco Chemical Co. and meta-tetramethylxylylene diisocyanate [a branched isocyanate also known as 1,3-bis(1-isocyanato-1-methylethyl)-benzene which is commercially available from Cytec Industries Inc. under the tradename TMXDI (Meta) Aliphatic Isocyanate] and mixtures thereof.

Other useful dinuclear cycloaliphatic diisocyanates include those formed through an alkylene group of from 1 to 3 carbon atoms inclusive, and which can be substituted with nitro, chlorine, alkyl, alkoxy and other groups that are not reactive with hydroxyl groups (or active hydrogens), providing they are not positioned so as to render the isocyanate group unreactive. Also, hydrogenated aromatic diisocyanates such as hydrogenated toluene diisocyanate may be used. Dinuclear diisocyanates in which one of the rings is saturated and the other unsaturated, which are prepared by partially hydrogenating aromatic diisocyanates such as diphenyl methane diisocyanates, diphenyl isopropylidene diisocyanate and diphenylene diisocyanate, may also be used.

Mixtures of cycloaliphatic diisocyanates with aliphatic diisocyanates and/or aromatic diisocyanates may also be used. An example is 4,4'-methylene-bis-(cyclohexyl isocyanate) with commercial isomer mixtures of toluene diisocyanate or meta-phenylene diisocyanate.

Thioisocyanates corresponding to the above diisocyanates can be used, as well as mixed compounds containing both an isocyanate and a thioisocyanate group.

Non-limiting examples of suitable isocyanates can include, but are not limited to, DESMODUR W, DESMODUR N 3300 (hexamethylene diisocyanate trimer), DESMODUR N 3400 (60% hexamethylene diisocyanate dimer and 40% hexamethylene diisocyanate trimer), which are commercially available from Bayer Corp.

Other non-limiting examples of suitable polyisocyanates include ethylenically unsaturated polyisocyanates; alicyclic polyisocyanates; aromatic polyisocyanates; aliphatic polyisocyanates; halogenated, alkylated, alkoxylated, nitrated, carbodiimide modified, urea modified and biuret modified derivatives of isocyanates; and dimerized and trimerized products of isocyanates.

Non-limiting examples of suitable ethylenically unsaturated polyisocyanates include butene diisocyanate and 1,3-butadiene-1,4-diisocyanate. Non-limiting examples of suitable alicyclic polyisocyanates include isophorone diisocyanate, cyclohexane diisocyanate, methylcyclohexane diisocyanate, bis(isocyanatomethyl) cyclohexane, bis(isocyanatocyclohexyl)methane, bis(isocyanatocyclohexyl)-2,2-propane, bis(isocyanatocyclohexyl)-1,2-ethane, 2-isocyanatomethyl-3-(3-isocyanatopropyl)-5-isocyanatomethyl-bicyclo[2.2.1]-heptane, 2-isocyanatomethyl-3-(3-isocyanatopropyl)-6-isocyanatomethyl-bicyclo[2.2.1]-heptane, 2-isocyanatomethyl-2-(3-isocyanatopropyl)-5-isocyanatomethyl-bicyclo[2.2.1]-heptane, 2-isocyanatomethyl-2-(3-isocyanatopropyl)-6-isocyanatomethyl-bicyclo[2.2.1]-heptane, 2-isocyanatomethyl-3-(3-isocyanatopropyl)-6-(2-isocyanatoethyl-bicyclo[2.2.1]-heptane, 2-isocyanatomethyl-2-(3-isocyanatopropyl)-5-(2-isocyanatoethyl)-bicyclo[2.2.1]-heptane and 2-isocyanatomethyl-2-(3-isocyanatopropyl)-6-(2-isocyanatoethyl)-bicyclo[2.2.1]-heptane.

Non-limiting examples of suitable aromatic polyisocyanates include α,α'-xylene diisocyanate, bis(isocyanatoethyl)benzene, α,α,α',α '-tetramethylxylene diisocyanate, 1,3-bis(1-isocyanato-1-methylethyl)benzene, bis(isocyanatobutyl)benzene, bis(isocyanatomethyl) naphthalene, bis(isocyanatomethyl)diphenyl ether, bis(isocyanatoethyl) phthalate, mesitylene triisocyanate and 2,5-di(isocyanatomethyl)furan, phenylene diisocyanate, ethylphenylene diisocyanate, isopropylphenylene diisocyanate, dimethylphenylene diisocyanate, diethylphenylene diisocyanate, diisopropylphenylene diisocyanate, trimethylbenzene triisocyanate, benzene diisocyanate, benzene triisocyanate, naphthalene diisocyanate, methylnaphthalene diisocyanate, biphenyl diisocyanate, toluidine diisocyanate, tolylidine diisocyanate, tolylene diisocyanate, 4,4'-diphenylmethane diisocyanate, bis(3-methyl-4-isocyanatophenyl)methane, bis(isocyanatophenyl)ethylene, 3,3'-dimethoxy-biphenyl-4,4'-diisocyanate, triphenylmethane triisocyanate, polymeric 4,4'-diphenylmethane diisocyanate, naphthalene triisocyanate, diphenylmethane-2,4,4'-triisocyanate, 4-methyldiphenylmethane-3,5,2',4',6'-pentaisocyanate, diphenylether diisocyanate, bis(isocyanatophenylether)ethyleneglycol, bis(isocyanatophenylether)-1,3-propyleneglycol, benzophenone diisocyanate, carbazole diisocyanate, ethylcarbazole diisocyanate and dichlorocarbazole diisocyanate.

In some non-limiting embodiments, the isocyanate comprises at least one triisocyanate or at least one polyisocyanate trimer. Non-limiting examples of such isocyanates include aromatic triisocyanates such as tris(4-iso-cyanatophenyl)methane (DESMODUR R), 1,3,5-tris(3-isocyanato-4-methylphenyl)-2,3,6-trioxohexahydro-1,3,5 triazine (DESMODUR IL); adducts of aromatic diisocyanates, such as the adduct of 2,4-tolylene diisocyanate (TDI, 2,4-diisocyanatotoluene) and trimethylolpropane (DESMODUR L); and from aliphatic triisocyanates such as N-isocyanatohexylaminocarbonyl-N,N'-bis(isocyanatohexyl)urea (DESMODUR N), 2,4,6-trioxo-1,3,5-tris(6-isocyanatohexyl)hexahydro-1,3,5-triazine (DESMODUR N3390), 2,4,6-trioxo-1,3,5-tris(5-isocyanato-1,3,3-trimethylcyclo-hexylmethyl)hexahydro-1,3,5-triazine DESMODUR Z4370), and 4-(isocyanatomethyl)-1,8-octane diisocyanate. The above DESMODUR products are commercially available from Bayer Corp. Also useful are the biuret of hexanediisocyanate, polymeric methane diisocyanate, and polymeric isophorone diisocyanate. Trimers of hexamethylene diisocyanate, isophorone diisocyanate and tetramethylxylylene diisocyanate.

In some non-limiting embodiments, the polyisocyanate used to make a polyurethane polyol prepolymer as a precursor is a cycloaliphatic compound, such as a dinuclear compound bridged by an isopropylidene group or an alkylene group of 1 to 3 carbon atoms.

In some embodiments, the polyisocyanate is a diisocyanate, such as methylene bis(phenyl isocyanate) (also known as MDI) 2,4-toluene diisocyanate (2,4-TDI); an 80:20 mixture of 2,4- and 2,6-toluene diisocyanate (also known as TDI); 3,-isocyanatomethyl-3,5,5-trimethyl cyclohexylisocyanate (IPDI); m-tetramethyl xylene diisocyanate (TMXDI); hexamethylene diisocyanate (HDI); and 4,4'-methylene-bis-(cyclohexyl isocyanate) (commercially available as DESMODUR W).

In some embodiments, the polyisocyanate can comprise 5 to 70 weight percent of the reactants used for preparing the urethane, or 10 to 50 weight percent of the reactants, or 12 to 35 weight percent of the reactants.

As discussed above, the urethane can be prepared from at least one polyol. As used herein, the term "polyol" includes compounds, monomers, oligomers and polymers comprising at least two hydroxyl groups (such as diols) or at least three hydroxyl groups (such as triols), higher functional polyols and mixtures thereof. Suitable polyols are capable of forming a covalent bond with a reactive group such as an isocyanate functional group.

Non-limiting examples of suitable polyols include hydrocarbon polyols, polyether polyols, polyester polyols and mixtures thereof. As used herein, hydrocarbon polyol means saturated aliphatic polyols, unsaturated aliphatic polyols such as olefins, alicyclic polyols and aromatic polyols.

Non-limiting examples of suitable diols include straight chain alkane diols such as ethylene glycol, diethylene glycol, triethylene glycol, tetraethylene glycol, 1,2-ethanediol, propane diols such as 1,2-propanediol and 1,3-propanediol, butane diols such as 1,2-butanediol, 1,3- butanediol, and 1,4-butanediol, pentane diols such as 1,5-pentanediol, 1,3-pentanediol and 2,4-pentanediol, hexane diols such as 1,6-hexanediol and 2,5-hexanediol, heptane diols such as 2,4-heptanediol, octane diols such as 1,8-octanediol, nonane diols such as 1,9-nonanediol, decane diols such as 1,10-decanediol, dodecane diols such as 1,12-dodecanediol, octadecanediols such as 1,18-octadecanediol, sorbitol, mannitol, and mixtures thereof. In some non-limiting embodiments, the diol is a propane diol such as 1,2-propanediol and 1,3-propanediol, or butane diol such as 1,2- butanediol, 1,3- butanediol, and 1,4-butanediol. In some non-limiting embodiments, one or more carbon atoms in the polyol can be replaced with one or more heteroatoms, such as N, S, or O, for example sulfonated polyols, such as dithio-octane bis diol, thiodiethanol such as 2,2-thiodiethanol, or 3,6-dithia-1,2-octanediol.

Other non-limiting examples of suitable diols include those represented by the following formula: 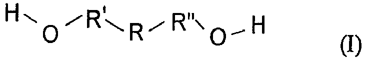 wherein R represents Co to C₁₈ divalent linear or branched aliphatic, cycloaliphatic, aromatic, heterocyclic, or oligomeric saturated alkylene radical or mixtures thereof; C₂ to C₁₈ divalent organic radical containing at least one element selected from the group consisting of sulfur, oxygen and silicon in addition to carbon and hydrogen atoms; C₅ to C₁₈ divalent saturated cycloalkylene radical; or C₅ to C₁₈ divalent saturated heterocycloalkylene radical; and R' and R" can be present or absent and, if present, each independently represent C₁ to C₁₈ divalent linear or branched aliphatic, cycloaliphatic, aromatic or aryl, heterocyclic, polymeric, or oligomeric saturated alkylene radical or mixtures thereof.

As used herein, "alkylene" means a difunctional group obtained by removal of a hydrogen atom from an alkyl group that is defined below. Non-limiting examples of alkylene include methylene, ethylene and propylene. "Alkyl" means an aliphatic hydrocarbon group which may be straight or branched and comprising 1 to 20 carbon atoms in the chain, or 1 to 6 carbon atoms in the chain. "Alkyl" may be unsubstituted or optionally substituted by one or more substituents which may be the same or different, each substituent being independently selected from the group consisting of halo, alkyl, aryl, cycloalkyl, cyano, hydroxy, alkoxy, alkylthio, amino, -NH(alkyl), -NH(cycloalkyl), -N(alkyl)₂, carboxy and -C(O)O-alkyl. Non-limiting examples of suitable alkyl groups include methyl, ethyl, n-propyl, isopropyl and t-butyl.

"Aryl" means an aromatic monocyclic or multicyclic ring system comprising 6 to 14 carbon atoms, preferably 6 to 10 carbon atoms. The aryl group can be optionally substituted with one or more "ring system substituents" which may be the same or different, and are as defined herein. Non-limiting examples of suitable aryl groups include phenyl and naphthyl.

"Cycloaliphatic" or "cycloalkyl" means a non-aromatic mono- or multicyclic ring system comprising 3 to 10 carbon atoms, or 5 to 10 carbon atoms. The cycloalkyl can be optionally substituted with one or more "ring system substituents" which may be the same or different, and are as defined herein. Non-limiting examples of suitable monocyclic cycloalkyls include cyclopropyl, cyclopentyl, cyclohexyl, cycloheptyl and the like. Non-limiting examples of suitable multicyclic cycloalkyls include 1-decalinyl, norbornyl, adamantyl and the like.

"Heterocyclic" means a non-aromatic saturated monocyclic or multicyclic ring system comprising 3 to 10 ring atoms, preferably 5 to 10 ring atoms, in which one or more of the atoms in the ring system is an element other than carbon, for example nitrogen, oxygen or sulfur, alone or in combination. There are no adjacent oxygen and/or sulfur atoms present in the ring system. The prefix aza, oxa or thia before the heterocyclyl root name means that at least a nitrogen, oxygen or sulfur atom, respectively, is present as a ring atom. Any -NH in a heterocyclyl ring may exist protected such as, for example, as an -N(Boc), -N(CBz), -N(Tos) group and the like; such protections are also considered part of this invention. The heterocyclyl can be optionally substituted by one or more "ring system substituents", which may be the same or different, and are as defined herein. The nitrogen or sulfur atom of the heterocyclyl can be optionally oxidized to the corresponding N-oxide, S-oxide or S,S-dioxide. Non-limiting examples of suitable monocyclic heterocyclyl rings include piperidyl, pyrrolidinyl, piperazinyl, morpholinyl, thiomorpholinyl, thiazolidinyl, 1,4-dioxanyl, tetrahydrofuranyl, tetrahydrothiophenyl, lactam, lactone, and the like.

"Ring system substituent" means a substituent attached to an aromatic or non-aromatic ring system which, for example, replaces an available hydrogen on the ring system. Ring system substituents may be the same or different, each being independently selected from the group consisting of alkyl, alkenyl, alkynyl, aryl, heteroaryl, aralkyl, alkylaryl, heteroaralkyl, heteroarylalkenyl, heteroarylalkynyl, alkylheteroaryl, hydroxy, hydroxyalkyl, alkoxy, aryloxy, aralkoxy, acyl, aroyl, halo, nitro, cyano, carboxy, alkoxycarbonyl, aryloxycarbonyl, aralkoxycarbonyl, alkylsulfonyl, arylsulfonyl, heteroarylsulfonyl, alkylthio, arylthio, heteroarylthio, aralkylthio, heteroaralkylthio, cycloalkyl, heterocyclyl, -C(=N-CN)-NH₂, -C(=NH)-NH₂, -C(=NH)-NH(alkyl), Y₁Y₂N-, Y₁Y₂N-alkyl-, Y₁Y₂NC(O)-, Y₁Y₂NSO₂- and -SO₂NY₁Y₂, wherein Y₁ and Y₂ can be the same or different and are independently selected from the group consisting of hydrogen, alkyl, aryl, cycloalkyl, and aralkyl. "Ring system substituent" may also mean a single moiety which simultaneously replaces two available hydrogens on two adjacent carbon atoms (one H on each carbon) on a ring system. Examples of such moieties are methylene dioxy, ethylenedioxy, -C(CH₃)₂- and the like which form moieties such as, for example:

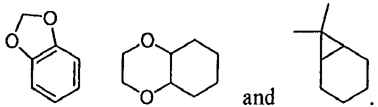

Other non-limiting examples of suitable diols include branched chain alkane diols, such as propylene glycol, dipropylene glycol, tripropylene glycol, neopentyl glycol, 2-methyl-butanediol. 2,2,4-trimethyl-1,3-pentanediol, 2-methyl-1,3-pentanediol, 2-ethyl-1,3-hexanediol, 2-methyl-1,3-propanediol, 2,2-dimethyl-1,3-propanediol, dibutyl 1,3-propanediol, polyalkylene glycols such as polyethylene glycols, and mixtures thereof.

In some non-limiting embodiments, the diol can be a cycloalkane diol, such as cyclopentanediol, 1,4-cyclohexanediol, cyclohexanedimethanols (CHDM), such as 1,4-cyclohexanedimethanol, cyclododecanediol, 4,4'-isopropylidene-biscyclohexanol, hydroxypropylcyclohexanol, cyclohexanediethanol, 1,2-bis(hydroxymethyl)-cyclohexane, 1,2-bis(hydroxyethyl)-cyclohexane, 4,4'-isopropylidene-biscyclohexanol, bis(4-hydroxycyclohexanol)methane, and 4,8-bis(hydroxymethyl)tricyclo[5.2.1.0^{2,6}]decane and mixtures thereof.

In some non-limiting embodiments, the diol can be an aromatic diol, such as dihydroxybenzene, 1,4-benzenedimethanol, xylene glycol, hydroxybenzyl alcohol and dihydroxytoluene; bisphenols, such as, 4,4'-isopropylidenediphenol (Bisphenol A), 4,4'-oxybisphenol, 4,4'-dihydroxybenzophenone, 4,4'-thiobisphenol, phenolphthalein, bis(4-hydroxyphenyl)methane, 4,4'-(1,2-ethenediyl)bisphenol and 4,4'-sulfonylbisphenol; hydrogenated bisphenols, halogenated bisphenols, such as 4,4'-isopropylidenebis(2,6-dibromophenol), 4,4'-isopropylidenebis(2,6-dichlorophenol) and 4,4'-isopropylidenebis(2,3,5,6-tetrachlorophenol); alkoxylated bisphenols, which can have, for example, ethoxy, propoxy, α-butoxy and β-butoxy groups; and biscyclohexanols, which can be prepared by hydrogenating the corresponding bisphenols, such as 4,4'-isopropylidene-biscyclohexanol, 4,4'-oxybiscyclohexanol, 4,4'-thiobiscyclohexanol and bis(4-hydroxycyclohexanol)methane, the alkoxylation product of 1 mole of 2,2-bis(4-hydroxyphenyl)propane (i.e., bisphenol-A) and 2 moles of propylene oxide, hydroxyalkyl terephthalates such as meta or para bis(2-hydroxyethyl) terephthalate, bis(hydroxyethyl) hydroquinone and mixtures thereof.

In some non-limiting embodiments, the diol can be an heterocyclic diol, for example a dihydroxy piperidine such as 1,4-bis(hydroxyethyl)piperazine; a diol of an amide or alkane amide [such as ethanediamide (oxamide)], for example N,N',bis(2-hydroxyethyl)oxamide; a diol of a propionate, such as 2,2-dimethyl-3-hydroxypropyl-2,2-dimethyl-3-hydroxypropionate; a diol of a hydantoin, such as bishydroxypropyl hydantoin; a diol of a phthalate, such as meta or para bis(2-hydroxyethyl) terephthalate; a diol of a hydroquinone, such as a dihydroxyethylhydroquinone; and/or a diol of an isocyanurate, such as dihydroxyethyl isocyanurate.

Non-limiting examples of trifunctional, tetrafunctional or higher polyols suitable for use include branched chain alkane polyols such as glycerol or glycerin, tetramethylolmethane, trimethylolethane (for example 1,1,1-trimethylolethane), trimethylolpropane (TMP) (for example 1,1,1-trimethylolpropane), erythritol, pentaerythritol, dipentaerythritol, tripentaerythritol, sorbitan, alkoxylated derivatives thereof (discussed below) and mixtures thereof.

In some non-limiting embodiments, the polyol can be a cycloalkane polyol, such as trimethylene bis(1,3,5-cyclohexanetriol); or an aromatic polyol, such as trimethylene bis(1,3,5-benzenetriol).

Further non-limiting examples of suitable polyols include the aforementioned polyols which can be alkoxylated derivatives, such as ethoxylated, propoxylated and butoxylated. In alternate non-limiting embodiments, the following polyols can be alkoxylated with from 1 to 10 alkoxy groups: glycerol, trimethylolethane, trimethylolpropane, benzenetriol, cyclohexanetriol, erythritol, pentaerythritol, sorbitol, mannitol, sorbitan, dipentaerythritol and tripentaerythritol. Non-limiting examples of suitable alkoxylated polyols include ethoxylated trimethylolpropane, propoxylated trimethylolpropane, ethoxylated trimethylolethane, and mixtures thereof.

In some non-limiting embodiments, the polyol can be an unsaturated aliphatic polyol such as NISSO GI-1000 hydroxy terminated, hydrogenated 1,2-polybutadiene (HPBD resin) having a calculated number average molecular weight of 1500 and a hydroxyl value of 60-120 KOH mg/g commercially available from Nippon Soda Co Ltd.

In some non-limiting embodiments, the polyol for use in the present invention can be an SH-containing material, such as a dithiol or polythiol. Non-limiting examples of suitable polythiols can include, but are not limited to, aliphatic polythiols, cycloaliphatic polythiols, aromatic polythiols, heterocyclic polythiols, polymeric polythiols, oligomeric polythiols and mixtures thereof. As used herein, the terms "thiol," "thiol group," "mercapto" or "mercapto group" refer to an -SH group which is capable of forming a thiourethane linkage, (i.e., -NH-C(O)-S-) with an isocyanate group or a dithiourethane linkage (i.e., -NH-C(S)-S-) with an isothiocyanate group.

In some embodiments, the polyol can be one or more polyether polyol(s). Non-limiting examples of polyether polyols include poly(oxyalkylene) polyols or polyalkoxylated polyols. Poly(oxyalkylene) polyols can be prepared in accordance with known methods. In a non-limiting embodiment, a poly(oxyalkylene) polyol can be prepared by condensing an alkylene oxide, or a mixture of alkylene oxides, using an acid- or base-catalyzed addition with a polyhydric initiator or a mixture of polyhydric initiators, such as ethylene glycol, propylene glycol, glycerol, and sorbitol. Compatible mixtures of polyether polyols can also be used. As used herein, "compatible" means that two or more materials are mutually soluble in each other so as to essentially form a single phase. Non-limiting examples of alkylene oxides can include ethylene oxide, propylene oxide, butylene oxide, amylene oxide, aralkylene oxides, such as styrene oxide, mixtures of ethylene oxide and propylene oxide. In some non-limiting embodiments, polyoxyalkylene polyols can be prepared with mixtures of alkylene oxide using random or step-wise oxyalkylation. Non-limiting examples of such poly(oxyalkylene) polyols include polyoxyethylene polyols, such as polyethylene glycol, and polyoxypropylene polyols, such as polypropylene glycol.

Other polyether polyols include block polymers such as those having blocks of ethylene oxide-propylene oxide and/or ethylene oxide-butylene oxide. In some non-limiting embodiments, the polyether polyol comprises a block copolymer of the following formula:

HO-(CHR₁CHR₂-O)ₐ-(CHR₃CHR₄-O)_{b}-(CHR₅CHR₆-O)_{c}-H

where R₁ through R₆ can each independently represent hydrogen or methyl; and a, b, and c can each be independently selected from an integer from 0 to 300, wherein a, b, and c are selected such that the number average molecular weight of the polyol is less than 32,000 grams/mole, or less than 10,000 grams/mole, as determined by GPC.

In some non-limiting embodiments, polyalkoxylated polyols can be represented by the following general formula: 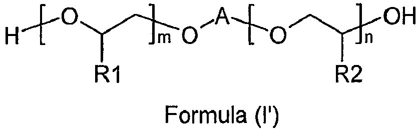 wherein m and n can each be a positive integer, the sum of m and n being from 5 to 70; R₁ and R₂ are each hydrogen, methyl or ethyl; and A is a divalent linking group such as a straight or branched chain alkylene which can contain from 1 to 8 carbon atoms, phenylene, and C₁ to C₉ alkyl-substituted phenylene. The values of m and n can, in combination with the selected divalent linking group, determine the molecular weight of the polyol. Polyalkoxylated polyols can be prepared by methods that are known in the art. In a non-limiting embodiment, a polyol such as 4,4'-isopropylidenediphenol can be reacted with an oxirane-containing material such as ethylene oxide, propylene oxide or butylene oxide, to form what is commonly referred to as an ethoxylated, propoxylated or butoxylated polyol having hydroxyl functionality.

In some non-limiting embodiments, the polyether polyol can be PLURONIC ethylene oxide/propylene oxide block copolymers, such as PLURONIC R and PLURONIC L62D, and/or TETRONIC tetra-functional block copolymers based on ethylene oxide and propylene oxide, such as TETRONIC R, which are commercially available from BASF Corp.

As used herein, the phrase "polyether polyols" also can include poly(oxytetramethylene) diols prepared by the polymerization of tetrahydrofuran in the presence of Lewis acid catalysts such as, but not limited to boron trifluoride, tin (IV) chloride and sulfonyl chloride.

In some embodiments, non-limiting examples of suitable polyether polyols include poly(propylene oxide) diols, copoly(ethylene oxide-propylene oxide) diols, and poly(tetramethylene oxide) diols.

In some embodiments, the polyether polyol can be POLYMEG^{®} 2000 polytetramethylene ether glycol (linear diol having a backbone of repeating tetramethylene units connected by ether linkages and capped with primary hydroxyls having a molecular weight of 1900-2100 and a hydroxyl number of 53.0 to 59.0), commercially available from Lyondell.

In other embodiments, the polyether polyol can be TERATHANE® 1000 polytetramethylene ether glycol is a blend of linear diols in which the hydroxyl groups are separated by repeating tetramethylene ether groups: HO(CH₂CH₂CH₂CH₂-O-)ₙH in which n averages 14 and having a hydroxyl number of 107-118, commercially available from INVISTA, or POLYMEG^{®} 1000.

In some non-limiting embodiments, the polyol can be one or more polyester polyol(s). In some embodiments, the polyester polyol is selected from the group consisting of polyester glycols, polycaprolactone polyols, polycarbonate polyols and mixtures thereof. Non-limiting examples of suitable polyester polyols include any well-known di-, tri-, or tetrahydroxy-terminated polyesters such as polylactone polyesters and polyester polyols produced by the polycondensation reactions of dicarboxylic acids or their anhydrides with di-, tri-, or tetra-alcohols.

Non-limiting examples of such polyester polyols include polyester glycols, polycaprolactone polyols, polycarbonate polyols and mixtures thereof. Polyester glycols can include the esterification products of one or more dicarboxylic acids having from four to ten carbon atoms, such as, but not limited to adipic, succinic or sebacic acids, with one or more low molecular weight glycols having from two to ten carbon atoms, such as, but not limited to ethylene glycol, propylene glycol, diethylene glycol, 1,4-butanediol, neopentyl glycol, 1,6-hexanediol and 1,10-decanediol. Esterification procedures for producing polyester polyols are described, for example, in the article D.M. Young et al., "Polyesters from Lactone," Union Carbide F-40, p. 147.

Non-limiting examples of polycaprolactone polyols include those prepared by condensing caprolactone in the presence of difunctional active hydrogen material such as water or low molecular weight glycols, for example ethylene glycol and propylene glycol. Non-limiting examples of suitable polycaprolactone polyols can include CAPA polycaprolactone polyols commercially available from Solvay Chemical of Houston, TX, such as CAPA 2085 linear polyester diol derived from caprolactone monomer, terminated by primary hydroxyl groups, and having a mean molecular weight of 830 and a typical OH value of 135 mg KOH/g, and the TONE series from Dow Chemical of Midland, MI, such as TONE 0201, 0210, 0230 and 0241. In some non-limiting embodiments, the polycaprolactone polyol has a molecular weight ranging from 500 to 2000 grams per mole, or 500 to 1000 grams per mole.

Non-limiting examples of polycarbonate polyols include aliphatic polycarbonate diols, for example those based upon alkylene glycols, ether glycols, alicyclic glycols or mixtures thereof. In some embodiments, the alkylene groups for preparing the polycarbonate polyol can comprise from 5 to 10 carbon atoms and can be straight chain, cycloalkylene or combinations thereof. Non-limiting examples of such alkylene groups include hexylene, octylene, decylene, cyclohexylene and cyclohexyldimethylene. Suitable polycarbonate polyols can be prepared, in non-limiting examples, by reacting a hydroxy terminated alkylene glycol with a dialkyl carbonate, such as methyl, ethyl, n-propyl or n-butyl carbonate, or diaryl carbonate, such as diphenyl or dinaphthyl carbonate, or by reacting of a hydroxy-terminated alkylene diol with phosgene or bischoloroformate, in a manner well-known to those skilled in the art. Non-limiting examples of suitable polycarbonate polyols include POLY-CD 210 hydroxyl-terminated 1000 MW poly(1,6-hexanediol)carbonate polyol commercially available from Arch Chemical.

Mixtures of any of the above polyols can be used.

In some non-limiting embodiments, the polyol can have a number average molecular weight of 100 to 10,000 grams/mole, or 500 to 5,000 grams/mole, or 600 to 3500 grams/mole.

In some embodiments, the polyol can comprise 10 to 90 weight percent of the reactants used for preparing the urethane, or 30 to 70 weight percent of the reactants, or 35 to 65 weight percent of the reactants.

As discussed above, the urethane can be prepared from at least one hydroxy-functional material having at least one acrylate group which can be, for example, selected from the group consisting of hydroxy functional acrylates, hydroxyl-functional vinyl ethers and mixtures thereof.

The phrase "hydroxyl-functional acrylate" means any hydroxyl-substituted acrylate or methacrylate compound that would be suitable for making and using a capped urethane material. Non-limiting examples of suitable hydroxy functional (meth)acrylates include hydroxyethyl acrylate, hydroxypropyl acrylate, hydroxybutyl acrylate, hydroxyethyl methacrylate, hydroxypropyl methacrylate, hydroxybutyl methacrylate and mixtures thereof. Other non-limiting examples of suitable hydroxy functional (meth)acrylates include 2-hydroxyethyl acrylate, 2-hydroxypropyl acrylate, 2-hydroxyethyl methacrylate, pentaerythritol triacrylate (PETA), and 4-hydroxybutyl acrylate.

The phrase "hydroxy functional vinyl ether" means any hydroxy-substituted vinyl ether that would be suitable for making and using a capped urethane oligomer. Non-limiting examples of suitable hydroxy functional vinyl ethers can be selected from the group consisting of hydroxyethyl vinyl ethers, hydroxypropyl vinyl ethers, hydroxybutyl vinyl ethers and mixtures thereof, such as ethylene glycol monovinyl ether, and cyclohexane dimethanol monovinyl ether.

In some non-limiting embodiments, the hydroxy-functional material having at least one acrylate group can have a number average molecular weight of 80 to 1,000 grams/mole, or 100 to 800 grams/mole, or 110 to 600 grams/mole.

In some non-limiting embodiments, the hydroxy-functional material having at least one acrylate group can comprise 1 to 30 weight percent of the reactants used for preparing the urethane, or 2 to 15 weight percent of the reactants, or 3 to 12 weight percent of the reactants.

As discussed above, the acrylate urethane can be prepared from at least one alcohol compound comprising at least two hydroxyl groups, e.g., a diol or polyol. As used herein, "alcohol compound" means a compound, monomer, oligomer or polymer having at least three or more hydroxyl groups.

In some non-limiting embodiments, the alcohol compound is selected from the group consisting of amino alcohols, thioether alcohols, phosphino alcohols and mixtures thereof. Non-limiting examples of suitable amino alcohols include N-phenyl diethanolamine, N-methyl diethanolamine, p-methylphenyl diethanolamine, N-ethyldiethanolamine, N-propyl diethanolamine, N-butyl diethanolamine, triethanolamine, triisopropanolamine, tributanolamine, 2,2'-(4-methylphenylimino)diethanol and mixtures thereof. Non-limiting examples of suitable thioether alcohols include those represented by the formula S-(XOH)₂, wherein each X is independently selected from alkylene groups having from 1 to 6 carbon atoms, cycloalkyl or aralkyl. In some embodiments, the thioether alcohol is HO-CH₂CH₂-S-CH₂CH₂-OH. In some embodiments, the alcohol is a tertiary phosphino alcohol comprising at least two hydroxy groups. In some embodiments, the phosphino alcohol is represented by the formula P-(XOH)₃ or R-P-(XOH)₂, wherein each X is independently selected from alkylene groups having from 1 to 6 carbon atoms, cycloalkyl or aralkyl, and R is alkyl, aryl, cycloalkyl or aralkyl.

In some non-limiting embodiments, the acrylated urethane comprises:
the reaction product of a difunctional poly(THF) oligomer, 4,4'-methylene-bis-(cyclohexyl isocyanate), 2-hydroxyethyl acrylate and triethanolamine; and
the reaction product of a difunctional poly(THF) oligomer, 4,4'-methylene-bis-(cyclohexyl isocyanate) and 2-hydroxyethyl acrylate.

In some non-limiting embodiments, acrylated urethanes are provided that are represented by the structure: 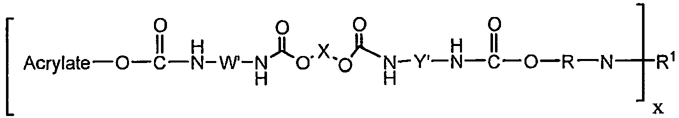 wherein x is 1 to 3; Acrylate is an acrylate-containing group or methacrylate-containing group; W' and Y' are each the residues of independently selected polyisocyanates; X is the residue of an alcohol compound comprising at least two hydroxyl groups, such as an alkylene group having 1 to 50 carbon atoms; R is alkylene or haloalkylene; R¹ is absent when x is 3; and when x is 1 or 2, R¹ is alkyl, haloalkyl, aralkyl, aryl, haloaryl, or alkaryl.

In some non-limiting embodiments, acrylated urethanes are provided that are represented by the structure: 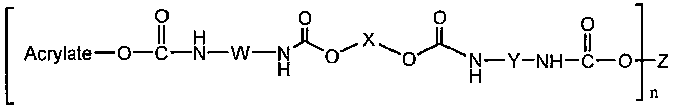 wherein n is 3, Acrylate is an acrylate-containing group or methacrylate-containing group; W and Y are each the residues of independently selected polyisocyanates, wherein the isocyanate moieties are incorporated into the adjacent urethane moieties on either side of the W or Y; X is the residue of an alcohol compound comprising at least two hydroxyl groups; and Z is the residue of an alcohol compound comprising at least three hydroxyl groups.

The acrylated urethanes of the present invention can be prepared by reacting at least one polyol with at least one polyisocyanate to form an isocyanate functional urethane prepolymer, then further reacting isocyanate functional urethane prepolymer according to the following non-limiting, general reaction scheme where m is 1 to 50:

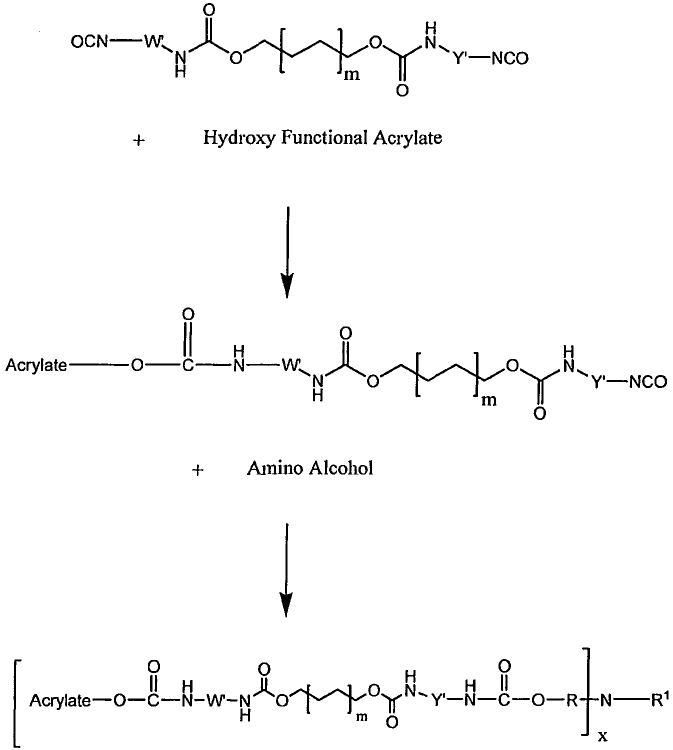

As shown above, an isocyanate-functional urethane prepolymer can be reacted with a hydroxy functional acrylate to form an isocyanate functional and acrylate functional urethane. The isocyanate groups are reacted with an amino alcohol to form an acrylated urethane of the present invention.

In some embodiments, the present invention provides a process for producing an acrylated urethane, the process comprising the steps of: reacting at least one polyisocyanate with at least one polyol to form an isocyanate terminated prepolymer; reacting a portion of the unreacted terminal isocyanate groups of the isocyanate terminated prepolymer with at least one hydroxyl-functional material having at least one acrylate group to form an acrylate terminated isocyanate-containing urethane; and reacting the remaining terminal isocyanate groups with at least one alcohol compound comprising at least two hydroxyl groups.

In other non-limiting embodiments, acrylated urethanes of the present invention are provided comprising the reaction product of: (a) at least one isocyanate functional urethane which is the reaction product of at least one alcohol compound selected from the group consisting of amino alcohols, thioether alcohols, phosphino alcohols and mixtures thereof and at least one polyisocyanate; and (b) at least one acrylate comprising at least one hydroxyl group. Non-limiting examples of suitable amino alcohols, thioether alcohols, phosphino alcohols, polyisocyanates and acrylates comprising at least one hydroxyl group are discussed in detail above. The amounts of each reactant can be similar to those discussed above. In some non-limiting embodiments, a process for producing such an acrylated urethane is provided, the process comprising the steps of: (1) reacting at least one at least one alcohol compound selected from the group consisting of amino alcohols, thioether alcohols, phosphino alcohols and mixtures thereof with at least one polyisocyanate to form an isocyanate functional urethane; (2) reacting a portion of the unreacted terminal isocyanate groups of the isocyanate functional urethane with at least one acrylate comprising at least one hydroxyl group to form an acrylated urethane.

The acrylated urethanes of the present invention can be used in crosslinkable compositions that are curable by radiation and/or use of anaerobic curing agents. The concentration of these acrylated urethanes can range from 1 to 100 weight percent, or 30 to 95 weight percent, or 50 to 95 weight percent of the curable composition.

While not intending to be bound by any theory, it is believed that the effect of oxygen in inhibiting surface cure is ameliorated by the acrylated urethanes of the present invention. Acrylated urethane of the present invention can, during photocuring, incorporate the oxygen diradical onto the growing polymer backbone chain. This eliminates the ability of the oxygen diradical to terminate the propagating polymer chains and thereby inhibit cure, especially at the surface where the concentration of oxygen diradicals is highest. The addition of the oxygen diradicals to the alkyl group R from structure (I) above, is shown in the non-limiting example below:

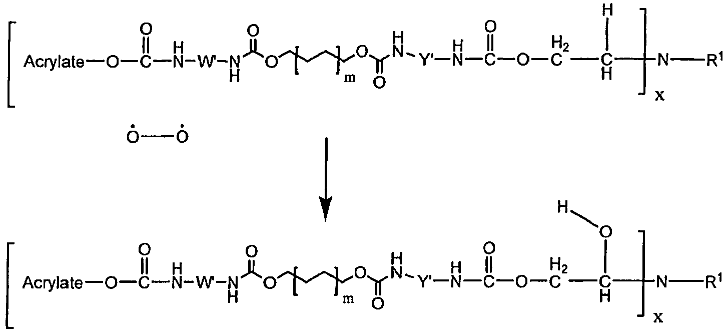

In addition, while not intending to be bound by any theory, it is also believed that the effect of incorporation of aromatic amino diols into acrylated urethanes of the present invention improves redox cure of these materials through grafting reactions onto oligomeric, prepolymeric, or polymeric backbone alkyl groups as illustrated below:

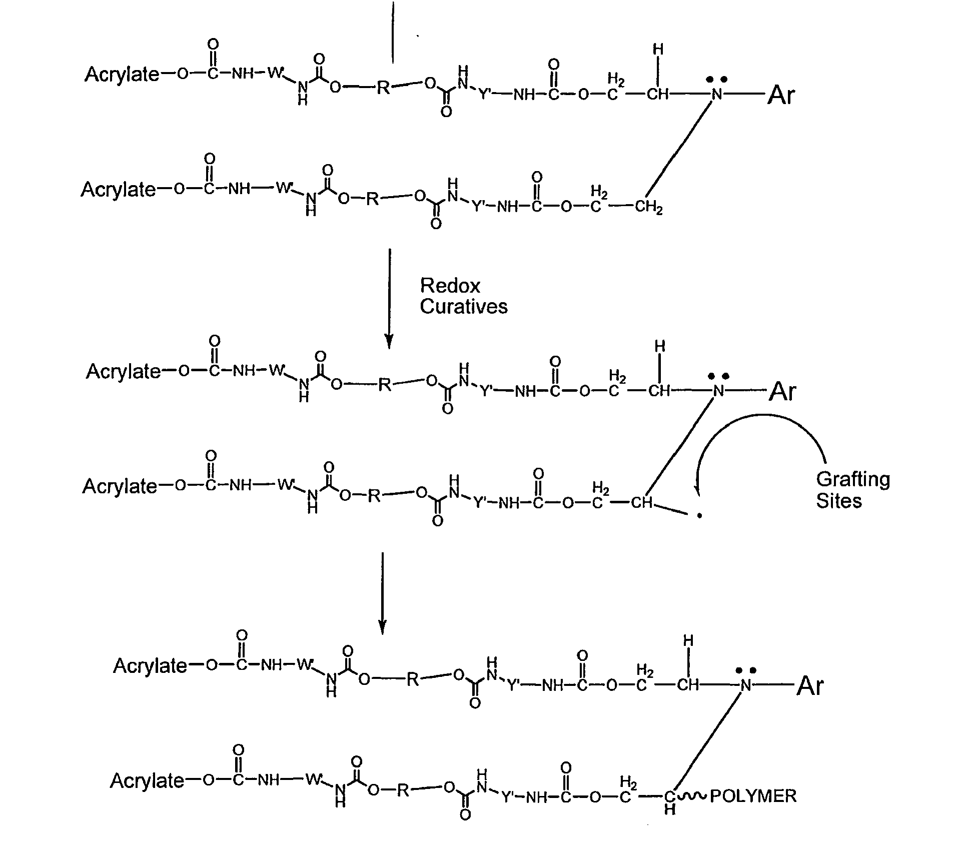

The acrylated urethanes of the present invention are radiation curable according to conventional methods of radiation curing including, but not limited to the use of ultraviolet light and electron beam energy. Generally, these acrylated urethanes may be used alone or as the principal component of the radiation curable composition, along with other components such as reactive monomers, crosslinkers and photoinitiators. Generally, any reactive monomer which is suitable for conventional radiation curable compositions may be used with the acrylated urethanes, for example acrylates or methacrylates. Non-limiting examples of suitable (meth)acrylate monomers include relatively low molecular weight mono, di, or poly(meth)acrylate compounds, examples of which include β-carboxyethyl acrylate, isobornyl acrylate, n-octyl acrylate, n-decyl actylate, cyclohexyl acrylate, tetrahydrofurfuryl acrylate, 2-ethylhexyl acrylate, ethoxyethoxyethyl acrylate, ethoxylated phenyl monoacrylate, hydroxyethyl acrylate, hydroxypropyl acrylate, hydroxybutyl acrylate, isooctyl acrylate, n-butyl acrylate, neopentyl glycol diacrylate, ethylene glycol diacrylate, diethylene glycol diacrylate, dipropylene glycol diacrylate, triethylene glycol diacrylate, tetraethylene glycol diacrylate, 1,6-hexane diol diacrylate, tripropylene glycol diacrylate, glycerol triacrylate, trimethylol propane diacrylate, trimethylol propane triacrylate, pentaerythritol tetraacrylate, phenoxyethyl acrylate, hydroxyethyl methacrylate, hydroxypropyl methacrylate, cyclohexyl methacrylate, glycerol monomethacrylate, glycerol 1,3-dimethacrylate, trimethyl cyclohexyl methacrylate, methyl triglycol methacrylate, isobornyl methacrylate trimethylolpropane trimethacrylate, neopentyl glycol dimethacrylate, ethylene glycol dimethacrylate, diethylene glycol dimethacrylate, 1,6-hexanediol dimethacrylate, hydroxybutyl methacrylate, tetrahydrofurfuryl methacrylate, cyclohexyl methacrylate, phenoxyethyl methacrylate, poly(ethylene glycol) methacrylate, and so forth. In some embodiments, suitable reactive monomers include hydroxyethyl acrylate, hydroxypropyl acrylate, hydroxyethyl methacrylate, hydroxypropyl methacrylate, isobornyl methacrylate and mixtures thereof.

In some embodiments, the reactive monomer component is a mixture of liquid ester monomers, preferably acrylate and methacrylate esters having a viscosity of 100-5,000 cps (100-5,000 mPa·s), preferably 100-4,000 cps (100-4,000 mPa·s), more preferably 100-2,000 cps 200-2,000 mPa·s).

The concentration of reactive monomers in the radiation curable composition can be from zero to 99 weight percent, or 5 to 70 weight percent or 5 to 50 weight percent.

Various adhesion promoters may be used in the radiation curable compositions of the invention, particularly where the composition is intended as an adhesive or coating. Adhesion promoters may include acid functional monomers such as acrylic acid or methacrylic acid, and silane adhesion promoters such as glycidoxypropyltrimethoxysilane, methacryloxypropyltrimethoxysilane, methacryloxypropyltriacetoxysilane, and acryloxypropyltrimethoxysilane, and various unsaturated nitrogen-containing compounds such as N,N'-dimethylacrylamide, acryloyl morpholine, N-methyl-N-vinyl acetamide, N-vinyl caprolactam, N-vinylphthalimide, Uracil, and N-vinylpyrrolidone. Adhesion promoters may be used alone or in combination. The adhesion promoter(s) may be used in the adhesive composition of the invention in an amount from 0.5% to 30% by weight of the composition, or 1% to 20% by weight, or 2% to 10% by weight.

One or more free radical photoinitiators can be included in the radiation curable composition. Suitable photoinitiators are active in the UV/visible range, approximately 250-850 nm, or some segment thereof. Examples of photoinitiators, which initiate under a free radical mechanism, include benzoyl peroxide, benzophenone, acetophenone, chlorinated acetophenone, dialkoxyacetophenones, dialkylhydroxyacetophenones, dialkylhydroxyacetophenone esters, benzoin, benzoin acetate, benzoin alkyl ethers, dimethoxybenzoin, dibenzylketone, benzoylcyclohexanol and other aromatic ketones, acyloxime esters, acylphosphine oxides, acylphosphosphonates, ketosulfides, dibenzoyldisulphides, diphenyldithiocarbonate and diphenyl(2,4,6-trimethylbenzoyl) phosphine oxide. Other examples of photoinitiators that may be used in the adhesive compositions of the present invention include photoinitiators available commercially from Ciba Specialty Chemicals, Tarrytown, NY, under the IRGACURE and DAROCUR tradenames, for example IRGACURE 184 (1-hydroxycyclohexyl phenyl ketone), 907 (2-methyl-1-[4-(methylthio)phenyl]-2-morpholino propan-1-one), 369 (2-benzyl-2-N,N-dimethylamino- 1-(4-morpholinophenyl)-1-butanone), 500 (the combination of 1-hydroxy cyclohexyl phenyl ketone and benzophenone), 651 (2,2-dimethoxy-2-phenyl acetophenone), 1700 (the combination of bis(2,6-dimethoxybenzoyl-2,4-,4-trimethyl pentyl phosphine oxide and 2-hydroxy-2-methyl-1-phenyl-propan-1-one) and DAROCUR 1173 (2-hydroxy-2-methyl-1-phenyl-1-propane) and 4265 (the combination of 2,4,6-trimethylbenzoyldiphenyl-phosphine oxide and 2-hydroxy-2-methyl-1-phenyl-propan-1-one); and the visible light [blue] photoinitiators, dl-camphorquinone and IRGACURE 784DC, or mixtures thereof.

In some embodiments, the photoinitiator comprises IRGACURE 2959 (1-[4-(2-hydroxyethoxy)-phenyl]-2-hydroxy-2-methyl-1-propane-1-one). In some embodiments, the photoinitiator comprises DAROCUR 4265, which consists of 50 wt % of DAROCUR TPO (diphenyl (2,4,6-trimethylbenzoyl) phosphine oxide) and 50 wt % of DAROCUR 1173 (2-hydroxy-2-methyl-1-phenyl-1-propanone), and which is commercially available from Ciba Specialty Chemicals.

Other useful photoinitiators include ultraviolet photoinitiators, such as 2,2-dimethoxy-2-phenyl acetophenone (e.g., IRGACURE 651), and 2-hydroxy-2-methyl-1-phenyl-1-propane (e.g., DAROCUR 1173) and the ultraviolet/visible photoinitiator combination of bis(2,6-dimethoxybenzoyl-2,4,4-trimethylpentyl)phosphine oxide and 2-hydroxy-2-methyl-1-phenyl-propan-1-one (e.g., IRGACURE 1700), as well as the visible photoinitiator bis(η⁵-2,4-cyclopentadien-1-yl)-bis[2,6-difluoro-3-(1H-pyrrol-1-yl)phenyl]titanium (e.g., IRGACURE 784DC). LUCIRIN TPO, from BASF is another useful photoinitiator. Typically, the photoinitiators can be used in an amount of 0.05 to 5 weight percent, or 0.5 to 5 weight percent of the composition.

In some alternative embodiments, the curable compositions of the present invention can be an anaerobic cure-inducing composition. Such an anaerobic cure-inducing composition useful in the present invention includes a variety of components, such as curing agents, accelerators and stabilizers. Typical curing agents include hydroperoxides, for example, t-butyl hydroperoxide, p-methane hydroperoxide, cumene hydroperoxide (CHP), diisopropylbenzene hydroperoxide, and the like. Typically, the curing agents can be used in an amount of 0.1 to 10 weight percent, or 0.5 to 5 weight percent of the composition.

Typical accelerators include amines, amine oxides, sulfonamides, metal sources, acids and/or triazines, for example, ethanol amine, diethanol amine, triethanol amine, N,N dimethyl aniline, benzene sulphanimide, cyclohexyl amine, triethyl amine, butyl amine, saccharin, N,N-diethyl-p-toluidine, N,N-dimethyl-o-toluidine, acetyl phenylhydrazine, maleic acid and the like. Suitable stabilizers include quinones, such as benzoquinone, naphthoquinone and anthraquinone, as well as hydroquinone, methoxyhydroquinone and butylated hydroxy toluene, as well as metal chelators such as EDTA or a salt thereof. Typically, the accelerators can be used in an amount of 0.1 to about 10 weight percent, or 0.5 to 5 weight percent of the composition. Other useful materials known to induce anaerobic cure include those disclosed in U.S. Patent Nos. 3,218,305 (Krieble), 4,180,640 (Melody), 4,287,330 (Rich) and 4,321,349 (Rich).

The curable composition can include one or more antioxidants, for example phenolic antioxidants such as IRGANOX 1010 commercially available from Ciba Specialty Chemicals. The radiation curable compositions may also contain small amounts of conventional additives much as pigments, wetting agents, and the like, which are employed in the usual known effective concentrations.

The radiation and/or anaerobically curable compositions of the present invention are produced by conventional methods by mixing the selected components together. The compositions can be applied to a substrate by conventional means, including spray, curtain, dip pad, roll-coating and brushing procedures. The compositions can be applied to any acceptable substrate such as wood, metal, glass, fabric, paper, fiber, plastic, and the like.

The applied radiation curable composition can be cured by any of the known actinic radiation curing methods such as exposure to ultraviolet light, X-rays, alpha particles, electron beam, or gamma rays. Irradiation can be performed using any of the known and commonly available types of radiation curing equipment, for example, curing may be done by low, medium, or high pressure mercury arc lamps. Curing can be carried out in air or in an inert atmosphere such as nitrogen or argon. Exposure time required to cure the composition varies somewhat depending on the specific formulation, type and wavelength of radiation, energy flux, and film thickness. Those skilled in the art of radiation technology will be able to determine the proper curing time for any particular composition. Generally, the cure time is rather short, that is, less than about 60 seconds.

The following examples further illustrate the present invention, without intending to narrow or depart from its scope. All parts and percentages are by weight unless explicitly stated otherwise.

### EXAMPLES

The following abbreviations have the following meanings as used herein:
Bi(Oct)₃ means bismuth trioctanoate;
BHT means butylated hydroxytoluene;
MDEA means N-methyldiethanolamine;
MeHQ means paramethoxyphenol or monomethyl ether hydroquinone;
MW means number average molecular weight;

### Example A

### Preparative Examples / Resins

### Preparative Example 1

Isobornyl methacrylate (83.84 g), IRGANOX 1010 phenolic antioxidant commercially available from Ciba Specialty Chemicals (0.22 g), MeHQ (0.22 g), CAPA 2085 linear polyester diol derived from caprolactone monomer, terminated by primary hydroxyl groups, and having a mean molecular weight of 830 and a typical OH value of 135 mg KOH/g commercially available from Solvay Chemicals (194.27 g), isophorone diisocyanate (106.54 g), and dibutyltin dilaurate (0.21 g) were added to a 500 ml resin flask immersed in a heating oil bath heated to 75°C with mechanical stirrer and air blanket. An exotherm to 80°C was observed. The reaction product was allowed to mix and cool down to 75°C over 1.5 hours. 2-Hydroxyethyl methacrylate (34.55 g) was added and the product stirred for 1 hour at 75°C. After determining NCO content by titration, 2,2'-(4-methylphenylimino)diethanol (18.65 g) and Bi(Oct)₃ (0.53 g) were added, with the reaction product maintained at 75°C with stirring for 8 hours. Yield: 424.4 g of a viscous resin.

### Preparative Example 2

Isobornyl methacrylate (312.7 g), BHT (0.13 g), MeHQ (0.13 g), hydrogenated bisphenol A (66.9 g), N-Phenyldiethanolamine (67 g) and dibutyltin dilaurate (0.59 g) were added into a 1 liter jacketed glass reactor with mechanical stirrer and air blanket. The reactor was heated to 70 °C, and then 80 weight percent of 2,4 toluene diisocyanate/ 20 weight percent 2,6-toluene diisocyanate blend (222.0 g) was added. The reaction exothermed to 125°C. The reaction mixture was cooled to 70 °C while mixing over one hour. Hydroxypropyl methacrylate (215.9 g) was added. The reaction exothermed to 83 °C. The product was cooled to 70 °C over two hours.

### Preparative Example 3

Isobornyl methacrylate (297.6 g), BHT (0.13 g), MEHQ (0.13 g), hydrogenated bisphenol A (91.2), N-Phenyldiethanolamine (25.5 g) and dibutyltin dilaurate (0.59 g) were added into a 1 liter jacketed glass reactor with mechanical stirrer and air blanket. The reactor was heated to 70 °C, and then flaked methylene diphenyl diisocyanate (250 g) was added. The reaction exothermed to 93 °C. The reaction mixture was allowed to mix and cool down to 70 °C over one hour. Hydroxypropyl methacrylate was added in three steps, with one addition every 30 minutes (71.8 g, 71.8 g, 41.7 g). The reaction exothermed to 109 °C. The mixture was allowed to react and cool to 70 °C over 2.5 hours.

### Preparative Example 4

4,8-bis(hydroxymethyl)tricyclo[5.2.1.0^{2,6}]decane (6.50 g), isobornyl methacrylate (121.07 g), IRGANOX 1010 (0.18 g), MeHQ (0.18 g), N-phenyldiethanolamine (29.33 g), tolylene diisocyanate (2,4/2,6) (68.76 g), and dibutyltin dilaurate (0.12 g) were added to a 500 ml resin flask immersed in a heating oil bath heated to 75°C with mechanical stirrer and air blanket. An exotherm to 82°C was observed. The reaction product was mixed and cooled to 75°C over one hour. After determining NCO content by titration, POLYMEG 2000 polytetramethylene ether glycol (linear diol having a backbone of repeating tetramethylene units connected by ether linkages and capped with primary hydroxyls having a molecular weight of about 1900-2100 and a hydroxyl number of about 53.0 to about 59.0) (230.11 g) and dibutyltin dilaurate (0.12 g) were added, with the reaction maintained at 75°C with stirring for 3 hours. 2-Hydroxyethyl methacrylate (23.63 g) and dibutyltin dilaurate (0.12 g) were added and the reaction allowed to stir for three hours at 75°C. Yield: 471.7g of a viscous resin.

### Preparative Example 5

4,8-bis(hydroxymethyl)tricyclo[5.2.1.0^{2,6}]decane (49.61 g), isobornyl methacrylate (232.22 g), IRGANOX 1010 (0.35 g), MeHQ (0.35 g), N-phenyldiethanolamine (22.39 g), tolylene diisocyanate (2,4/2,6) (131.20 g), and dibutyltin dilaurate (0.23 g) were added to a 500 ml resin flask immersed in a heating oil bath heated to 75°C with mechanical stirrer and air blanket. An exotherm to 82°C was observed. The reaction was mixed and cooled to 75°C over one hour. After determining NCO content by titration, POLYMEG 2000 (437.75 g) and dibutyltin dilaurate (0.23 g) were added, with the reaction maintained at 75°C with stirring for three hours. 2-Hydroxyethyl methacrylate (45.11 g) and dibutyltin dilaurate (0.23 g) were added and the reaction allowed to stir for three hours at 75°C. Yield: 904.8 g of a viscous resin.

### Preparative Example 6

POLY-CD 210 hydroxyl-terminated 1000 MW poly(1,6-hexanediol)carbonate polyol commercially available from Arch Chemical (222.1 g), IRGANOX 1010 (0.22 g), MeHQ (0.22 g), 1,6-hexanediol diacrylate (86.97 g), isophorone diisocyanate (99.72 g), and dibutyltin dilaurate (0.17 g) were added to a 500 ml resin flask immersed in a heating oil bath heated to 75°C with mechanical stirrer and air blanket. An exotherm to 80°C was observed. The reaction was mixed and cooled to 75°C over 1.5 hours. 2-Hydroxyethyl acrylate (26.06 g) was added and the reaction allowed to stir for one hour at 75°C. After determining NCO content by titration, N-methyldiethanolamine (11.40 g) and Bi(Oct)₃ (0.54 g) were added, with the reaction maintained at 75°C with stirring for six hours. Yield: 431.6 g of a light yellow, viscous resin.

### Preparative Example 7

NISSO GI-1000 hydroxy terminated, hydrogenated 1,2-polybutadiene (HPBD resin) having a calculated number average molecular weight of about 1500 and a hydroxyl value of about 60-75 KOH mg/g commercially available from Nippon Soda Co Ltd. (274.48 g), IRGANOX 1010 (0.23 g), MeHQ (0.23 g), isobornyl acrylate (92.15 g), isophorone diisocyanate (74.62 g), and dibutyltin dilaurate (0.18 g) were added to a 500 ml resin flask immersed in a heating oil bath heated to 75°C with mechanical stirrer and air blanket. An exotherm to 80°C was observed. The reaction was mixed and cooled to 75°C over 1.5 hours. 2-Hydroxyethyl acrylate (19.50 g) was added and the reaction product stirred for one hour at 75°C. After determining NCO content by titration, N-methyldiethanolamine (8.66 g) and Bi(Oct)₃ (0.57 g) were added, with the reaction maintained at 75°C with stirring for three hours. Yield: 459.6 g of a light yellow, viscous resin.

### Preparative Example 8

NISSO GI-1000, (300.13 g), IRGANOX 1010 (0.24 g), MeHQ (0.24 g), 4,4'-bis(cyclohexyl)methane diisocyanate (96.98 g), and dibutyltin dilaurate (0.24 g) were added to a 500 ml resin flask immersed in a heating oil bath heated to 75°C with mechanical stirrer and air blanket. An exotherm to 78°C was observed. The reaction was mixed and cooled to 75°C over 1.5 hours. 2-Hydroxyethyl acrylate (25.59 g) was added and the reaction allowed to stir for one hour at 75°C. After determining NCO content by titration, triethanolamine (6.40 g), 1,6-hexanediol diacrylate (47.75 g), and dibutyltin dilaurate (0.24 g) were added, with the reaction maintained at 75°C with stirring for four hours. Yield: 455.7 g of a viscous resin.

### Preparative Example 9

POLY-CD 210, (230.21 g), IRGANOX 1010 (0.23 g), MeHQ (0.23 g), 1,6-hexanediol diacrylate (90.15 g), isophorone diisocyanate (103.36 g), and dibutyltin dilaurate (0.18 g) were added to a 500 ml resin flask immersed in a heating oil bath heated to 75°C with mechanical stirrer and air blanket. An exotherm to 80°C was observed. The reaction was mixed and cooled to 75°C over 1.5 hours. 2-Hydroxyethyl acrylate (27.02 g) was added and the reaction stirred for one hour at 75°C. After determining NCO content by titration, 2,2'-thiodiethanol (12.12 g) and Bi(Oct)₃ (0.56 g) were added, with the reaction maintained at 75°C with stirring for three hours. Yield: 449.3 g of a colorless, viscous resin.

### Preparative Example 10

TERATHANE 1000 polytetramethylene ether glycol (a blend of linear diols in which the hydroxyl groups are separated by repeating tetramethylene ether groups:

HO(CH₂CH₂CH₂CH₂-O-)ₙH

in which n averages 14 and having a hydroxyl number of 107-118 commercially available from INVISTA) (229.83 g), IRGANOX 1010 (0.21 g), MeHQ (0.21 g), 4,4'-bis(cyclohexyl)methane diisocyanate (124.36 g), and dibutyltin dilaurate (0.21 g) were added to a 500 ml resin flask immersed in a heating oil bath heated to 75°C with mechanical stirrer and air blanket. An exotherm to 78°C was observed. The reaction was mixed and cooled to 75°C over 1.5 hours. 2-Hydroxyethyl acrylate (17.78 g), IRGACURE 2959 (1-[4-(2-Hydroxyethoxy)-phenyl]-2-hydroxy-2-methyl-1-propane-1-one) commercially available from Ciba Specialty Chemicals (33.92 g), and 1,6-hexanediol diacrylate (42.21 g) were added and the reaction allowed to stir for one hour at 75°C. After determining NCO content by titration, triethanolamine (6.82 g) and dibutyltin dilaurate (0.21 g) were added, with the reaction maintained at 75°C with stirring for four hours. Yield: 447.0g of a viscous resin.

### Preparative Example 11

TERATHANE 1000, (231.60 g), IRGANOX 1010 (0.22 g), MeHQ (0.22 g), 4,4'-bis(cyclohexyl)methane diisocyanate (125.32 g), and dibutyltin dilaurate (0.22 g) were added to a 500 ml resin flask immersed in a heating oil bath heated to 75°C with mechanical stirrer and air blanket. An exotherm to 78°C was observed. The reaction was mixed and cooled to 75°C over 1.5 hours. 2-Hydroxyethyl acrylate (26.87 g), IRGACURE 2959 (17.09 g), and 1,6-hexanediol diacrylate (43.53 g) were added and the reaction allowed to stir for one hour at 75°C. After determining NCO content by titration, triethanolamine (6.92 g) and dibutyltin dilaurate (0.22 g) were added, with the reaction maintained at 75°C with stirring for four hours. Yield: 442.6 g of a viscous resin.

### Application Examples / Testing

### Rheometry Test Method

(Photo)rheometry data was obtained using a Physica MCR301 rheometer equipped with a UV cell. The rheometer measures a number of different responses, including complex shear modulus (G*), storage modulus (G'), loss modulus (G"), and damping factor (tan delta = G" / G'). When a viscoelastic material is subjected to an oscillatory vibration, some energy is stored in the polymer, which is proportional to the elastic component of the modulus G', or storage modulus, and some of the energy is converted to heat through internal friction, or viscous dissipation of the energy, which is termed the loss modulus G". The complex shear modulus is defined as G* = G' + iG". The ratio of the lost and the stored deformation energy, or the viscous versus elastic portion of the deformation behavior, is termed the damping factor and is represented by tan δ. Further details on terminology can be found in ASTM D-4092. Two measurements are generally reported for each rheometry test: 1) crossover time of a curing polymer, defined as the time required to reach tan delta = 1.00; and 2) the plateau value of G*, or the value of G* assumed to correspond to a fully cured polymer. The crossover time indicates how fast the sample cures (i.e., cure kinetics), while the plateau modulus indicates the relative stiffness (material properties) of the final product. Oscillatory photorheometry tests were carried out at 25°C under nitrogen according to ASTM D-4473 unless otherwise noted. The light source used for curing studies was an OMNICURE Series 1000 high pressure 100 W mercury arc purchased from EXFO Photonics Solutions, Inc. It was equipped with a 320 - 500 nm bandpass filter, EXFO Part #P019-01040. The UV dose was controlled by either a shutter setting or by irradiation time, or both. The instrument was run using 25 mm parallel plates in controlled strain mode, with a fixed frequency of 1 Hz and the strain typically set at 1 - 3 % prior to curing and adjusted to 0.02 - 0.05 % after cure (based on the linear viscoelastic regions of the uncured and cured materials, respectively). The gap between plates was initially .00 mm; during cure the gap was automatically adjusted by the instrument to maintain a normal force of 0 N on the plates regardless of sample shrinkage.

### Surface Cure

Surface cure testing was performed to demonstrate that covalent bonding of a tertiary amine into a resin backbone by reaction with an amino alcohol can improve surface cure properties at least as efficiently as addition of a "small molecule" amine. An added advantage of the resin-bound amino alcohol is that chain transfer to amine during the polymerization propagation step does not reduce the molecular weight of the resulting polymer, as it does when a small molecule amine is used. Similar principles apply when the bound species is a thiol or phosphino alcohol instead of a tertiary amine.

For photocured samples, surface cure (when applicable) was tested by drawing down a 30 mil (0.76 mm) thick film of each sample on a glass slide and irradiating the uncovered film in a Zeta 7216 cure chamber equipped with a Fusion H bulb. The incident UV intensity was 78 mW/cm². After a specified cure time (usually 2 - 10 seconds), the surface of the cured film was sprinkled with 80 grit silicon carbide. The applied grit was lightly brushed (three times each in two orthogonal directions). The tackiness (or limited cure) of the surface was then rated based on the amount of SiC that remained embedded in any uncured material.

### Example 12: Anaerobic nut/bolt testing with four different resin-bound amino alcohols

Anaerobic adhesives were prepared using some of the inventive resins and were tested on degreased steel threaded fasteners according to ASTM D-5649. The adhesives were formulated by adding the amine-functional resins to the premix described in Table 1.

**Table 1. Premix Used for Anaerobic Formulations**

| Component | Amount (wt%) |
|---|---|
| Triethylene glycol dimethacrylate | 74.66% |
| Saccharin | 7.79% |
| PM16 | 3.10% |
| PM17 | 14.45% |

| | |
|---|---|
| *(PM16 consists of naphthoquinone in a solvent, and PM17 contains the sodium salt of ethylenediaminetetraacetic acid (EDTA), also in a solvent* | |

The amine-functionalized resins were added to the premix at a weight ratio of approximately 9:1 (resin:premix). Cumene hydroperoxide (CHP) was then added to the solution in the amount specified in Table 2, and lauryl methacrylate was added to reduce viscosity (see Table 2). A commercial product, Loctite 242, commercially available from Henkel Corporation, was used as a control during testing. The components of each formulation, weight of each component (grams) and breakloose strength test results (according to ASTM D-5649) are given in Table 2.

**Table 2. Formulations Used for Anaerobic Testing and Threaded Fastener Test Results**

| | Formulation # | | | | Control |
|---|---|---|---|---|---|
| Component | 12-1 | 12-2 | 12-3 | 12-4 | L242 |
| Preparative Example 1 resin | 13.52 | -- | -- | -- | na |
| Preparative Example 2 resin | -- | 13.5 | -- | -- | na |
| Preparative Example 3 resin | -- | -- | 13.57 | -- | na |
| Preparative Example 4 resin | -- | -- | -- | 13.5 | na |
| Premix (Table 1) | 1.77 | 1.5 | 1.51 | 1.51 | na |
| CHP | 0.26 | 0.260 | 0.26 | 0.25 | na |
| Lauryl methacrylate | 2 | 2.01 | 2 | 2.01 | na |
| Breakloose Strength, 15 min (in*lb) | 77 ± 14 | 86 ± 16 | 70 ± 11 | 90 ± 3 | 84 ± 12 |
| 180° Prevail, 15 min (in*lb) | 0.6 | 0.6 | 0.6 | 0.6 | 0.6 |
| Breakloose Strength, 1 hr (in*lb) | 96 ± 15 | 81 ± 19 | 67 ± 11 | 81 ± 21 | 127 ± 13 |
| 180° Prevail, 1 hr (in*lb) | 0.7 | 0.7 | 0.6 | 0.6 | 2.7 ± 0.9 |
| Breakloose Strength, 24 hr (in*lb) | 258 ± 15 | 297 ± 29 | 241 ± 19 | 193 ± 30 | 196 ± 25 |
| 180° Prevail, 24 hr (in*lb) | 176 ± 21 | 142 ± 37 | 169 ± 40 | 118 ± 12 | 32 ± 8 |

### Example 13: 2K acrylic with resin-bound amine in part A

Two different block urethane resins with N-phenyldiethanolamine (NPDEA) in the backbone were evaluated in two-component (2K) acrylic compositions. The first resin, described in Preparative Example 5, contained 2.43 wt% NPDEA. The second resin, described in Preparative Example 4, contained 6.11 wt% NPDEA. The 2K compositions are shown in Table 3. The weight of each component is given in grams.

**Table 3. 2K Acrylic Compositions**

| Component | 13-1 | | 13-2 | |
|---|---|---|---|---|
| | Part A | Part B | Part A | Part B |
| Preparative Example 5 resin | -- | -- | 5.045 | -- |
| Preparative Example 4 resin | 5.06 | -- | -- | -- |
| Benzoyl peroxide | -- | 0.31 | -- | 0.12 |
| Poly(ethylene glycol) dimethacrylate | -- | 2.77 | -- | 2.39 |
| Block resin (no NPDEA) | -- | 1.97 | -- | 2.51 |
| *Net amine content* | *3.06 wt%* | | *1.22 wt%* | |

Each composition was transferred immediately upon mixing of the two parts to a Physica MCR301 parallel plate rheometer, with the bottom plate held at 15 °C. Curing of the composition was monitored as the increase in complex shear modulus over time. Crossover time, defined as the time required for the ratio of storage modulus to elastic modulus to reach 1.00, was recorded for each composition. For composition 13-1, the time required to crossover at 15 °C was approximately 86 minutes; the complex shear modulus plateaued after about six hours at a value of 20 MPa. For 13-2, the time required to crossover at 15 °C was approximately 600 min; the complex shear modulus had not quite plateaued at the end of a 25 hour experiment, but appeared to be approaching a limiting value of approximately 14 MPa.

### Example 14: Polycarbonate with resin-bound amine - Photocure

Three polycarbonate-based compositions were evaluated by photorheometry and also tested for surface cure in the presence of oxygen. The photoinitiator used was DAROCUR 4265, which consists of 50 wt % of DAROCUR TPO (Diphenyl (2,4,6-trimethylbenzoyl) phosphine oxide) and 50 wt % of DAROCUR 1173 (2-hydroxy-2-methyl-1-phenyl-1-propanone), and which is commercially available from Ciba Specialty Chemicals.

Composition 14-1: 99 wt% Preparative Example 6 resin + 1 wt% DAROCUR 4265.

Composition 14-2 (control, no amine): 99 wt% Sartomer CN2921 aliphatic urethane acrylate oligomer commercially available from Sartomer Company Inc. + 1 wt% DAROCUR 4265.

Composition 14-3 (control, free amine): 96.45 wt% Sartomer CN2921 + 1 wt% DAROCUR 4265 + 2.55 wt% N-methyldiethanolamine.

After irradiation for five seconds at 78 mW/cm², both composition 14-1 and composition 14-3 were completely tack-free (no SiC grit retained). Composition 14-2 had a tacky surface and retained almost all of the applied SiC. Photorheometry was carried out using a UV radiation dose of 30 seconds at 50 mW/cm², under a nitrogen purge. Results are shown in Table 4.

**Table 4. Photorheometry Data for Polycarbonate Compositions**

| Composition | Gel point (s) | Plateau Shear Modulus (MPa) |
|---|---|---|
| 1 | 4.1 | 14 |
| 2 | 5.2 | 14 |
| 3 | 2.4 | 15 |

### Example 15: HPBD resin with 1.84% bound MDEA - Photocure

The resin from Preparative Example 7 was mixed with 1 wt% DAROCUR 4265. A 30 mil (0.76 mm) thick film drawn down on a glass slide was completely tack-free after being irradiated for 10 seconds at 78 mW/cm². After just five seconds at 78 mW/cm², the surface of the film retained about 30% of the applied SiC. A 1 mm thick film irradiated for 30 seconds at 50 mW/cm² on the photorheometer had a crossover time of 22.7 seconds and a plateau shear modulus of 7 MPa.

### Example 16: NISSO / HPBD resin - according to the invention

The resin from Preparative Example 8 was heated to 55 °C to soften. DAROCUR 4265 was added at 1 wt%, and the composition was mixed in a DAC 400FVZ speed mixer. A 30 mil (0.76 mm) thick film drawn down on a glass slide was completely tack-free after being irradiated for five seconds at 8 mW/cm². A 1 mm thick film irradiated for 30 seconds at 50 mW/cm² on the photorheometer had a crossover time of 7.2 seconds and a plateau shear modulus of 2 MPa.

### Example 17: Resin-bound thiol

The resin from Preparative Example 9 was mixed with 1 wt% DAROCUR 4265. For comparison, a similar resin without any thiol functionality was also blended with 1 wt% DAROCUR 4265. The thiol-containing sample cured with a completely tack-free surface after 40 seconds at 78 mW/cm² (30 mil (0.76 mm) thick film); the thiol-free control was tacky and retained approximately 60% of the applied SiC under the same conditions. Both samples were evaluated by photorheometry using a cure profile of 30 seconds at 50 mW/cm². The thiol-containing sample gelled after 3.7 seconds and reached a plateau modulus of 13 MPa. The thiol-free control gelled in 3.4 seconds and reached a plateau modulus of 5 MPa.

### Example 18: Resin with both amine and PI in backbone - according to the invention

The resins in Preparative Examples 10 and 11 contain both tertiary amine and a photoinitiator covalently bound to the resin backbones. The resins were tested neat with no further additives.

Both resins, when applied as 30 mil (0.76 mm) thick films, cured completely tack-free within two seconds at a UV intensity of 78 mW/cm². Photorheometry experiments were carried out under nitrogen using a cure profile of 30 seconds at 88 mW/cm². The resin from Preparative Example 10 gelled in 4.4 seconds and reached a plateau shear modulus of 5 MPa. The resin from Preparative Example 11, with a lower photoinitiator content, gelled in 4.1 seconds and reached a plateau shear modulus of 7 MPa.

The resin from Preparative Example 10 was cast into a 5 inch x 5 inch x 0.075 inch (12.7 cm x 12.7 cm x 0.2 cm) test sheet sandwiched between two Mylar-lined glass plates and cured by irradiating for 30 seconds per side (60 seconds total) at a UV intensity of approximately 175 mW/cm². Six dumbbell tensile specimens were pressed from the cured test sheet and were evaluated for tensile strength according to ASTM D-412. The tensile strength of the film at break was 13 ± 0.5 MPa, and elongation at break was 75 ± 2%.

### Example B:

### Preparative Example B

Isobornyl methacrylate (77.70 g), IRGANOX 1010 (0.20 g), MeHQ (0.20 g), CAPA 2085 linear polyester diol terminated by primary hydroxyl groups (180.03 g), isophorone diisocyanate (98.73 g), and dibutyltin dilaurate (0.19 g) were added to a 500 ml resin flask immersed in a heating oil bath heated to 75°C with mechanical stirrer and air blanket. An exotherm to 80°C was observed. The reaction was allowed to mix and cool down to 75°C over 1.5 hours. 2-Hydroxyethyl methacrylate (32.02 g) was added and the reaction product was stirred for one hour at 75°C. After determining NCO content by titration, N-phenyldiethanolamine (16.38 g) and Bi(Oct)3 (0.49 g) were added, with the reaction maintained at 75°C with stirring for four hours. Yield: 392.1g of a viscous resin.

### Example 19

A 2K composition was prepared with part A consisting of 5.06 g of the resin from Preparative Example B and part B comprising a solution of 0.20 g LUPEROX A98 benzoyl peroxide (commercially available from Atofma Chemicals) in 4.83 g BISOMER PEG200DMA polyethylene glycol 200 dimethacrylate (commercially available from Cognis). The two parts were mixed such that the BPO and NPDEA functionalities were each present in the final mixture at approximately 2.02 wt%. The resulting mixture was quickly transferred to a Physica MCR3O1 rheometer held at 15 °C, and its polymerization was monitored as the increase in complex shear modulus over time.

The polymer-bound amine ("Bound amine") provided for an inhibition period (i.e., working time) of at least three minutes, followed by a more gradual increase in modulus until the plateau value was reached (about 33 minutes after mixing).

### Example C

### Preparative Example C

Isobornyl acrylate (76.58 g), CAPA 2085 (181.07 g), isophorone diisocyanate (99.31 g), and dibutyltin dilaurate (0.15 g) were added to a 500 ml resin flask immersed in a heating oil bath heated to 75°C with mechanical stirrer and air blanket. An exotherm to 80°C was observed. The reaction was allowed to mix and cool down to 75°C over 1.5 hours. 2-Hydroxyethyl acrylate (25.96 g) was added and the reaction product was stirred for one hour at 75°C. After determining NCO content by titration, N-phenyldiethanolamine (18.61 g) and Bi(Oct)₃ (0.49 g) were added, with the reaction maintained at 75°C with stirring for four hours. Yield: 388.2g of a viscous resin.

Three visible light sensitive compositions were made using camphorquinone as a photoinitiator. The resin from Preparative Example C was used in one composition to evaluate the efficiency of the resin-bound amine as a co-initiator with camphorquinone. For comparison, a CAPA 2085-based resin, similar to that described in the above Preparative Example C but without NPDEA or any other amine functionality, was used to prepare two control compositions.

Composition C-1 (bound amine): To 17.9 g of the resin from Preparative Example C was added 0.20 g camphorquinone (Aldrich) and 1.98 g N,N-dimethylacrylamide (DMAA, Aceto Corporation).

Composition C-2 (no amine): To 17.8 g of the control resin was added 0.20 g camphorquinone and 2.00 g N,N-dimethylacrylamide.

Composition C-3 (free amine): To 17.0 g of the control resin was added 0.20 g camphorquinone, 1.98 g N,N-dimethylacrylamide, and 0.84 g N-phenyldiethanolamine (NPDEA).

To study the visible light-sensitivity, the UV source on the photorheometer was fitted with a bandpass filter (part #03FCG459 from Melles Griot). The filtered light emitted a single peak centered near 450 nm, with a peak width at half height of about 15 nm. Each sample was irradiated for 30 seconds at 50 mW/cm². The emitted light had an effective irradiance of 21 mW/cm². Rheometer results are shown in Table 5.

**Table 5. Photorheometer Results for Visible Light Cured Compositions**

| Composition | Gel Point Plateau (s) | Shear Modulus (MPa) |
|---|---|---|
| C-1 (bound amine) | 7 | 6 |
| C-2 (no amine) | 13 | 0.2 |
| C-3 (free amine) | 21 | 0.005 |

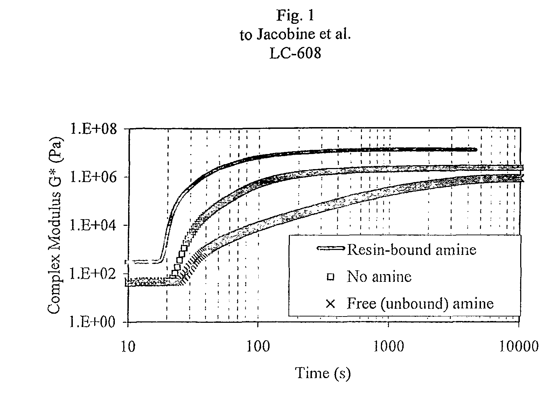

As shown in Fig. 1, the rheometer data indicated that the bound amine cured faster than the two controls and gave a more rigid material.

### Example D

### Preparative Example D1 (Control)

Terathane 1000, (168.67 g), IRGANOX 1010 (0.15 g), MeHQ (0.15 g), 4,4'-bis(cyclohexyl)methane diisocyanate (91.27 g), and dibutyltin dilaurate (0.14 g) were added to a 500 ml resin flask immersed in a heating oil bath heated to 75°C with mechanical stirrer and air blanket. An exotherm to 78°C was observed. The reaction was allowed to mix and cool down to 75°C over 1.5 hours. 2-Hydroxyethyl acrylate (24.08 g) was added and the reaction allowed to stir for one hour at 75°C. After determining NCO content by titration, trimethylolpropane (5.43 g), bismuth octoate (0.29 g), and 2-(2-ethoxy)ethoxyethyl acrylate (15.30 g), were added, with the reaction maintained at 75°C with stirring for eight hours. Yield: 294.8 g of a viscous resin.

The product resin (36.50 g) and N,N-dimethylacrylamide (11.50 g) were stirred using a high shear blade for 30 minutes, producing a nearly colorless solution.

### Preparative Example D2 - according to the invention

TERATHANE 1000, (170.24 g), IRGANOX 1010 (0.15 g), MeHQ (0.15 g), 4,4'-bis(cyclohexyl)methane diisocyanate (92.12 g), and dibutyltin dilaurate (0.15 g) were added to a 500 ml resin flask immersed in a heating oil bath heated to 75°C with mechanical stirrer and air blanket. An exotherm to 78°C was observed. The reaction was allowed to mix and cool down to 75°C over 1.5 hours. 2-Hydroxyethyl acrylate (24.31 g) was added and the reaction product stirred for one hour at 75°C. After determining NCO content by titration, triethanolamine (6.22 g) and 2-(2-ethoxy)ethoxyethyl acrylate (25.55 g), were added, with the reaction maintained at 75°C with stirring for eight hours. Yield: 307.2 g of a light yellow, viscous resin.

The product resin (35.34 g), 2-(2-ethoxy)ethoxyethyl acrylate (1.15 g), and N,N-dimethylacrylamide (11.50 g) were stirred using a high shear blade for 30 minutes, producing a nearly colorless solution.

Composition D-1 (control): 0.410 g DAROCUR 4265 was mixed into 19.62 g of the resin/DMA solution from Preparative Example D1.

Composition D-2 (tertiary amine in backbone): 0.413 g DAROCUR 4265 was mixed into 19.59 g of the resin/DMA solution from Preparative Example D2.

Thirty mil (0.76 mm) thick films were drawn down on glass slides from Compositions D-1 and D-2. The films were irradiated for two seconds at 78 mW/cm² using a Fusion H bulb, then dusted with 80 grit silicon carbide. Composition D-2 gave a completely tack-free surface, retaining no SiC, while composition D-1 remained tacky, retaining about 80% of the applied SiC.

The two compositions were each cast into a 5 inch x 5 inch x 0.020 inch (12.7 cm x 12.7 cm x 0.051 cm) test sheet sandwiched between two Mylar-lined glass plates. The test sheets were cured by irradiating for 30 seconds per side (60 seconds total) at a UV intensity of approximately 175 mW/cm². Six dumbbell tensile specimens were pressed from each cured test sheet and were evaluated for tensile strength according to ASTM D-412. Results are shown in Table 6.

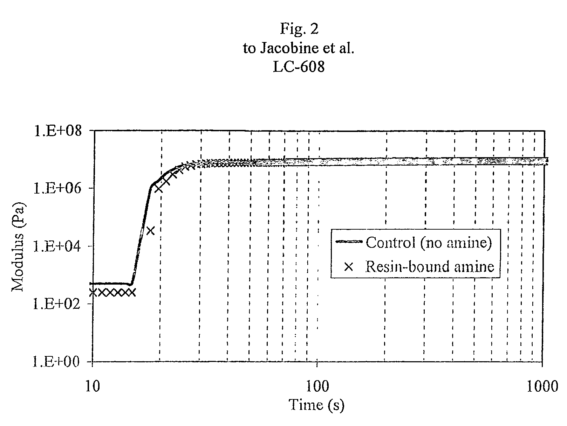

Photorheometry was carried out, irradiating the samples for 30 seconds at an intensity of 50 mW/cm² under nitrogen using a high pressure mercury lamp. Results are shown in Fig. 2 and Table 6.

**Table 6. Tensile and Photorheometer Results for Terathane 1000-Based Resins**

| Composition | Tensile Strength (MPa) | Elongation at break (%) | Gel Time (s) | Plateau Shear Modulus (MPa) |
|---|---|---|---|---|
| D-1 control | 18.8 ± 2.1 | 114 ± 7 | 4.1 | 9.4 |
| D-2 bound amine | 20.8 ± 2.6 | 134 ± 4 | 4.0 | 10.1 |

## Claims

1. An acrylated urethane represented by the structure: 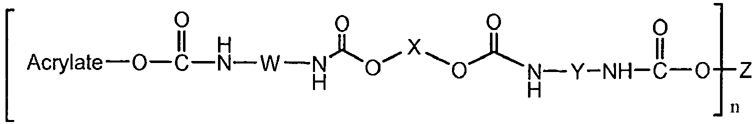 wherein n is 3; Acrylate is an acrylate-containing group or methacrylate-containing group; W and Y are each the residues of independently selected polyisocyanates; X is the residue of an alcohol compound comprising at least two hydroxyl groups; and Z is the residue of an alcohol compound comprising at least three hydroxyl groups which is selected from the group consisting of amino alcohols, thioether alcohols, phosphino alcohols and mixtures thereof.

2. The acrylated urethane according to claim 1, comprising the reaction product of a difunctional poly(THF) oligomer, 4,4'-methylene-bis-(cyclohexyl isocyanate), 2-hydroxyethyl acrylate and triethanolamine

3. A composition comprising the acrylated urethane according to claim 1 and at least one anaerobic curing component.

4. The composition according to claim 3, wherein the anaerobic curing component is a hydroperoxide selected from the group consisting of t-butyl hydroperoxide, p-methane hydroperoxide, cumene hydroperoxide (CHP), diisopropylbenzene hydroperoxide, and mixtures thereof.

5. A composition comprising the acrylated urethane according to claim 1 and at least one accelerator.

6. The composition according to claim 5, wherein the accelerator is selected from the group consisting of amines, amine oxides, sulfonamides, metal sources, acids, and mixtures thereof.

7. A composition comprising the acrylated urethane according to claim 1 and at least one stabilizer.

8. A radiation-curable composition comprising:
(1) the acrylated urethane according to claim 1; and
(2) at least one reactive monomer.

9. A crosslinked polymer composition obtained by exposing the composition of claim 8 to radiation.

## Patentansprüche

1. Acryliertes Urethan, dargestellt durch die folgende Struktur: 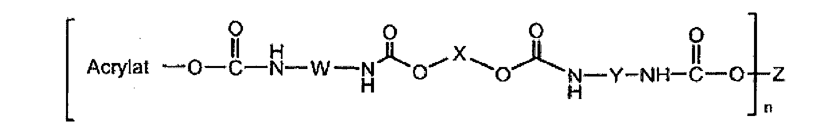 wobei n 3 ist; Acrylat eine acrylathaltige Gruppe oder methacrylathaltige Gruppe ist; W und Y jeweils die Rückstände von unabhängig ausgewählten Polyisocyanaten sind; X der Rückstand einer Alkoholverbindung ist, umfassend wenigstens zwei Hydroxylgruppen; und Z der Rückstand einer Alkoholverbindung ist, umfassend wenigstens drei Hydroxylgruppen, ausgewählt aus der Gruppe bestehend aus Aminoalkoholen, Thioetheralkoholen, Phosphinoalkoholen und Mischungen daraus.

2. Acryliertes Urethan nach Anspruch 1, umfassend das Reaktionsprodukt aus einem difunktionellen Poly-(THF)-oligomer, 4,4'-Methylen-bis-(cyclohexylisocyanat), 2-Hydroxyethylacrylat und Triethanolamin.

3. Zusammensetzung umfassend das acrylierte Urethan nach Anspruch 1 und mindestens eine anaerobe Härtungskomponente.

4. Zusammensetzung nach Anspruch 3, wobei die anaerobe Härtungskomponente ein Hydroperoxid ist, ausgewählt aus der Gruppe bestehend aus t-Butylhydroperoxid, p-Methanhydroperoxid, Cumolhydroperoxid (CHP), Diisopropylbenzenhydroperoxid und Mischungen daraus.

5. Zusammensetzung, umfassend das acrylierte Urethan nach Anspruch 1 und mindestens einen Beschleuniger.

6. Zusammensetzung nach Anspruch 5, wobei der Beschleuniger ausgewählt ist aus der Gruppe bestehend aus Aminen, Aminoxiden, Sulfonamiden, Metallquellen, Säuren und Mischungen daraus.

7. Zusammensetzung, umfassend das acrylierte Urethan nach Anspruch 1 und mindestens einen Stabilisator.

8. Strahlungshärtbare Zusammensetzung, enthaltend:
(1) das acrylierte Urethan nach Anspruch 1; und
(2) wenigstens ein reaktives Monomer.

9. Vernetzte Polymerzusammensetzung, gewonnen durch Aussetzen der Zusammensetzung nach Anspruch 8 einer Strahlung.

## Revendications

1. Uréthane acrylé représenté par la structure : 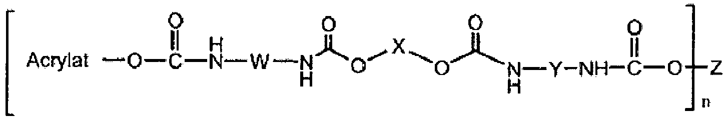 dans laquelle n est égal à 3 ; acrylate est un groupe contenant de l'acrylate ou un groupe contenant du méthacrylate ; W et Y sont chacun les résidus de polyisocyanates choisis indépendamment ; X est le résidu d'un composé d'alcool contenant au moins deux groupes hydroxyle ; et Z est le résidu d'un composé d'alcool, comprenant au moins trois groupes hydroxyle, qui est sélectionné dans le groupe constitué par les amino-alcools, les thioéther alcools, les phosphino alcools et leurs mélanges.

2. Uréthane acrylé selon la revendication 1, comprenant le produit de réaction d'un oligomère poly(THF) difonctionnel, le 4,4'-méthylène-bis-(cyclohexylisocyanate),2-hydroxyéthyl acrylate et la triéthanolamine.

3. Composition comprenant l'uréthane acrylé selon la revendication 1 et au moins un composant de durcissement anaérobie.

4. Composition selon la revendication 3, dans laquelle le composant de durcissement anaérobie est un hydroperoxyde choisi dans le groupe constitué par l'hydroperoxyde de t-butyle, l'hydroperoxyde de p-méthane, l'hydroperoxyde de cumène (CHP), l'hydroperoxyde de diisopropylbenzène, et leurs mélanges.

5. Composition comprenant l'uréthane acrylé selon la revendication 1 et au moins un accélérateur.

6. Composition selon la revendication 5, dans laquelle l'accélérateur est choisi dans le groupe constitué par les amines, les oxydes d'amines, les sulfonamides, les sources de métal, les acides et leurs mélanges.

7. Composition comprenant de l'uréthane acrylé selon la revendication 1 et au moins un stabilisant.

8. Composition durcissable par irradiation comprenant :
(1) l'uréthane acrylé selon la revendication 1 ; et
(2) au moins un monomère réactif.

9. Composition de polymère réticulé obtenue par exposition de la composition selon la revendication 8 à un rayonnement.
